# EUROPEAN PATENT APPLICATION

(11) **EP 2 784 658 A1**
(43) Date of publication of application: **01.10.2014**
(21) Application number: 14160114.6
(22) Date of filing: 14.03.2014
(51) Int. Cl.: G06F 3/06

(54) **Virtual tape device, tape control device, and tape control method**

(30) Priority: 26.03.2013 JP 2013064010
(71) Applicant: FUJITSU LIMITED, Kawasaki-shi Kanagawa 211-8588 (JP)
(72) Inventor: Taniyama, Yukio, Kawasaki-shi Kanagawa 211-8588 (JP)
(74) Representative: Stebbing, Timothy Charles

(57) **Abstract**

A virtual tape device (301) connected to an upper device (201) and a tape library device (401), and storing a tape volume includes: a storage unit (391) to store the tape volume including a plurality of blocks; an identifier control unit (325) to add to each block of the tape volume a first identification number which is incremented for each block, and a second identification number which is incremented only in a block subsequent to a leading block, a tape mark indicating a delimiter of a file, and a block subsequent to the tape mark; a first control unit (324) to control a read and a write of the tape volume stored in the storage unit using the second identification number; and a second control unit (325) to write the tape volume and the first identification number to the tape library device, and control the tape library device using the first identification number.

## Description

### FIELD

The embodiments discussed herein are related to a virtual tape device, a tape control device, and a tape control method.

### BACKGROUND

A large capacity storage device for backup of data may be a magnetic tape device, a virtual tape device, etc.

The tape format used by a magnetic tape device and a virtual tape device is standardized by ISO, ANSI, JIS, etc.

For example, the 36 track tape format used by the magnetic tape device and the virtual tape device is JIS X6135, ISO/IEC 14251, and the file configuration is described in JIS X601.

The 36 track tape format used in the virtual tape device and the magnetic tape device includes the following block.

Volume Block (VOL): a 80-byte block describing a volume name, an owner name

Header 1 Block (HDR 1): a 80-byte block describing a file name, an update date, etc.

Header 2 Block (HDR 2): a 80-byte block describing a record format, a block length, etc.

Data Block (D1, ..., DN): a variable length block describing data

Tape Mark Block (TM): a mark block indicating a delimiter of a file

End of File 1 Block (EOF 1): a 80-byte block describing a file name, a update date, etc.

End of File 2 Block (EOF 2): a 80-byte block describing a record format, a block length, etc.

End of Data Block (EOD): a mark block indicating the end of a tape volume

A block identifier (BID) for identification of he position on a magnetic tape is added to each block of a tape volume.

In the conventional BID, 0 is assigned to the leading block, and each of the subsequent blocks is incremented by 1.

When data is read or written on a magnetic tape, the magnetic tape device detects on the magnetic tape the position of the block on which a read or a write is performed using a BID.

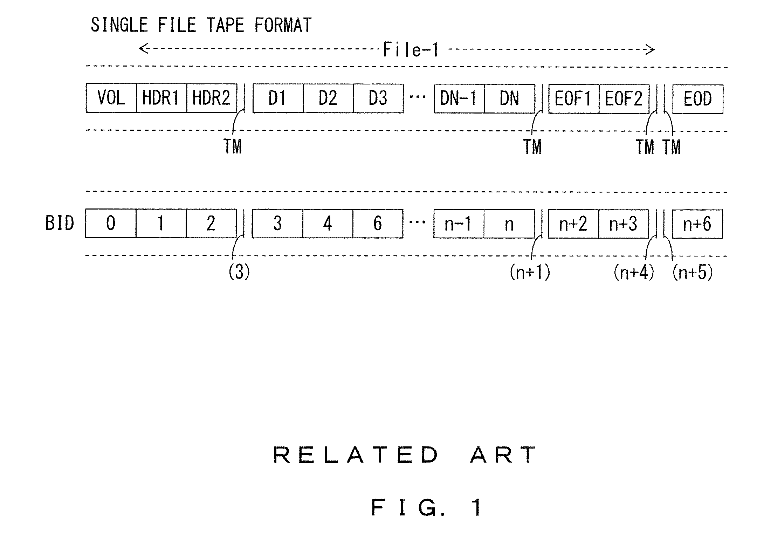

FIG. 1 illustrates the tape format and the BID of a single file.

The upper part of FIG. 1 illustrates the block of a tape format, and the lower part illustrates the BID added to each block.

FIG. 1 illustrates the tape volume including a file (File-1).

In the tape format of a single file, a VOL is arranged at the head, each block (HDR 1, HDR 2, TM, D1, D2, ..., DN, TM, EOF 1, EOF 2, TM) of the File-1 is arranged next, and finally a TM and an EOD are arranged.

As illustrated in the lower part of FIG. 1, 0 is assigned to the leading VOL in the BID, and the assigned number is incremented for each of the subsequent blocks.

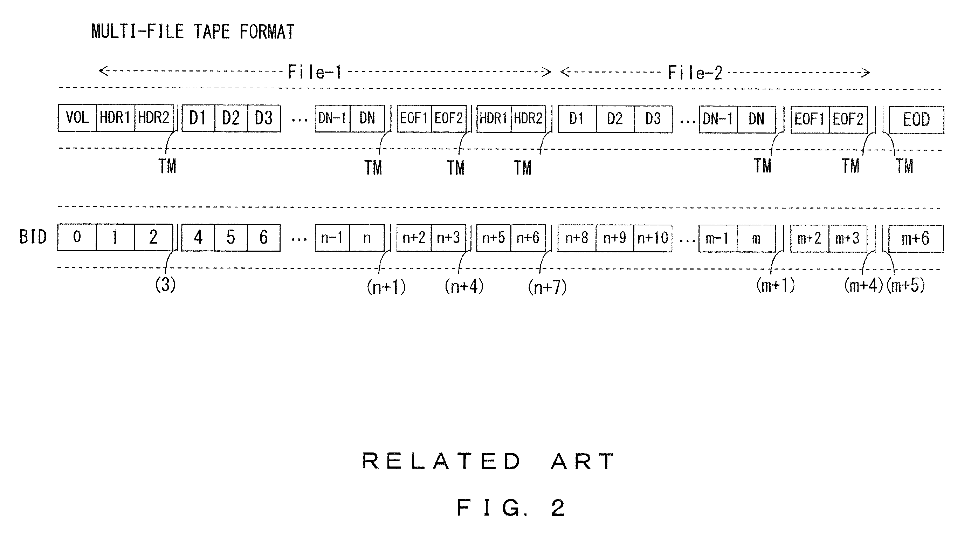

FIG. 2 illustrates the tape format and the BID of a multi-file.

The upper part of FIG. 2 illustrates the block of a tape volume, and the lower part illustrates the BID added to each block.

FIG. 2 illustrates the tape volume including two files, that is, File-1 and File-2.

In the tape format of a multi-file, a VOL is arranged at the head, each block (HDR 1, HDR 2, TM, D1, D2, ..., DN, TM, EOF 1, EOF 2, TM) of File-1 is arranged next, and each block (HDR 1, HDR 2, TM, D1, D2, ..., DN, TM, EOF 1, EOF 2, TM) of File-2 is arranged after the last TM of File-1, and finally a TM and an EOD are arranged.

As illustrated at the lower part of FIG. 2, 0 is assigned to the leading VOL in the BID, and the assigned number is incremented by 1 for each block.

The BID is defined as tape format information, and the maximum capacity of the tape which may be recognized on the host side is determined by the number of blocks (total number of BIDs) which may be written to a tape by a tape drive, and a block size.

For example, in the tape format used in a virtual tape device, the tape format of the conventional 36 track tape format is used. In the 36 track tape format, the data area of a BID is defined by 22 bits (3FFFFFh), and the operating system (OS) of the host which controls them also manages the tape capacity using the BID as 22 bits.

For example, when data is written in a 32kb block size, the tape volume capacity which may be managed by a host is 137 GB (32 Kb x 4 M (22 bits)), and the host is unable of managing a tape volume larger than 137 GB.

Recently, the recording capacity per volume of tape has become large enough to exceed 137 GB such as 200 GB, 400 GB, 800 GB, etc. by the improvement of a recording system. By a new tape format, the data area of a BID is defined as a 32-bit (FFFFFFFFh) area. For example, when data is written in a 32kb-block size, the manageable volume capacity is 137 TB (32 Kb x 4 G(32 bits)).

When the BID is 22 bits and a block size is 32 Kb, there is the following problem with a system which uses a 36 track tape format.
(1) When a tape volume exceeding 137 GB is copied in the 36 track tape format of a virtual tape device, a plurality of volumes of tape are obtained.
(2) When a virtual tape device performs an export (outputs a virtual volume to an actual tape, and takes it out of the virtual tape device), only data of the maximum of 137 GB may be output to a large capacity (for example, 800 GB or more) actual tape, and a storage area of the large capacity of tape is not effectively used.
(3) When a write error occurs at the position (area over 137 GB) where the capacity of the management of the OS is exceeded using the OS which controls the conventional 36 track tape format, the position of the occurrence of the error is not specified, thereby disabling data from the host to be recovered.

[Patent Document 1] Japanese Laid-open Patent Publication No. 5-241736
[Patent Document 2] Japanese Laid-open Patent Publication No. 6-302112
[Patent Document 3] International Publication Pamphlet No. WO 2012/042661

### SUMMARY

It is an object in one aspect of the invention to increase the size of the tape volume that may be managed by a host, and increase the available area of a recording medium.

According to an aspect of the invention, a virtual tape device is connected to an upper device and a tape library device including a magnetic tape, and stores a tape volume of a virtual tape drive.

The virtual tape device includes a storage unit, an identifier control unit, a first control unit, and a second control unit.

The storage unit stores the tape volume including a plurality of blocks.

The identifier control unit adds to each block of the tape volume a first identification number which increases for each block of the tape volume, and a second identification number which increases only in a block subsequent to the leading block of the tape volume, a tape mark indicating the delimiter of a file, and a block subsequent to the tape mark.

The first control unit controls reading and writing the tape volume stored in the storage unit using the second identification number between the virtual tape device and the upper device.

The second control unit writes the tape volume and the first identification number to the tape library device, and controls the tape library device using the first identification number.

According to an aspect of the invention, a tape control device is connected to an upper device and a tape library device including a magnetic tape, and stores a tape volume.

The tape control device includes a buffer, an identifier control unit, a first control unit, and a second control unit.

The buffer stores the tape volume including a plurality of blocks.

The identifier control unit adds to each block of the tape volume a first identification number which increases for each block of the tape volume, and a second identification number which increases only in a block subsequent to the leading block of the tape volume, a tape mark indicating the delimiter of a file, and a block subsequent to the tape mark.

The first control unit controls reading and writing the tape volume stored in the buffer using the second identification number between the virtual tape device and the upper device.

The second control unit writes the tape volume and the first identification number to the tape library device, and controls the tape library device using the first identification number.

### BRIEF DESCRIPTION OF DRAWINGS

FIG. 1 illustrates a tape format and a BID of a single file;
FIG. 2 illustrates a tape format and a BID of a multi-file;
FIG. 3 illustrates a tape format, a BID, and an F-BID of a single file according to an embodiment;
FIG. 4 illustrates a tape format, a BID, and an F-BID of a multi-file according to an embodiment;
FIG. 5 illustrates a configuration of a system according to the first embodiment;
FIG. 6 is an example of a management table;
FIG. 7 is a flowchart of a writing process and an updating process of a host according to the first embodiment;
FIGs. 8A and 8B is a flowchart of a writing process and an updating process of a virtual tape device according to the first embodiment;
FIG. 9 illustrates an F-BID of a data buffer before detecting a write error and when detecting a write error;
FIG. 10 illustrates the process of a host when a write error occurs according to the first embodiment;
FIG. 11 is a detailed flowchart of the error recovery process according to the first embodiment;
FIG. 12 is a flowchart of the error recovery process of the virtual tape device according to the first embodiment;
FIG. 13 illustrates the F-BID on the data buffer when there is no error, when an error occurs, and after error recovery is performed;
FIG. 14 is a configuration of the system according to the second embodiment;
FIG. 15 is a flowchart of a writing process and an updating process of a host according to the second embodiment;
FIG. 16 is a flowchart of a writing process and an updating process of a tape control device according to the second embodiment;
FIG. 17 illustrates an F-BID of a data buffer before detecting a write error and when detecting a write error;
FIG. 18 illustrates the process of a host when a write error occurs according to the second embodiment;
FIG. 19 is a detailed flowchart of the error recovery process according to the second embodiment; and
FIG. 20 is a flowchart of the error recovery process of the tape control device according to the second embodiment.

### DESCRIPTION OF EMBODIMENTS

The embodiments are described below according to the attached drawings.

First, the update rule of a new BID (hereafter referred to as an F-BID) used in the first and second embodiments is described below.

In the first and second embodiments, in addition to a BID, an F-BID is added to each block of a tape volume. In the embodiments, the BID is assigned 32 bits, the F-BID is smaller than the bit, and is assigned 22 bits.

As described above, the conventional BID is incremented by 1 for each subsequent block.

On the other hand, in the F-BID according to an embodiment, 0 is added to the leading block (VOL) of the tape volume, and the number is incremented by 1 in the block subsequent to the leading block of the tape volume, the tape mark, and the block subsequent to the tape mark only.

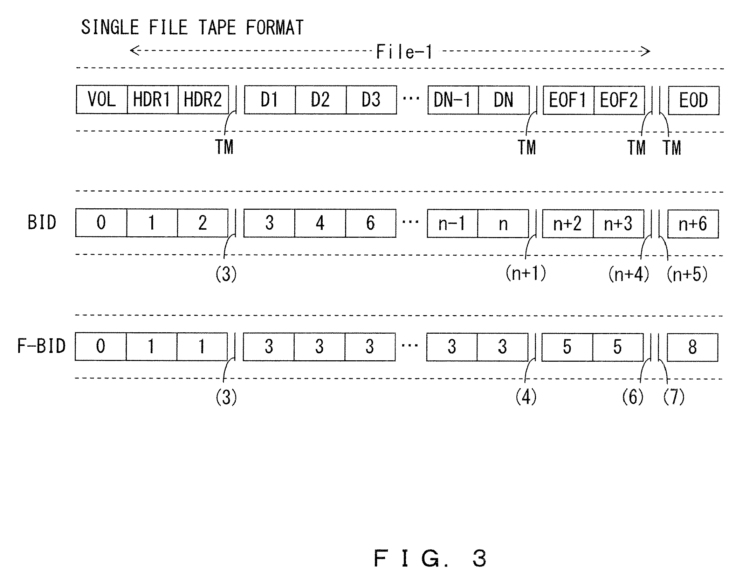

FIG. 3 illustrates a tape format, a BID, and an F-BID of a single file according to an embodiment.

The first row in FIG. 3 indicates the tape format of a single file, the second row indicates a BID, the third row indicates an F-BID.

The tape format and the BID of a single file are similar to those in FIG. 1, and the explanation is omitted here.

The third row in FIG. 3 indicates the F-BID added to each block based on the update rule of the above-mentioned F-BID.

That is, F-BID=0 is added to the VOL, F-BID=1 is added to HDR 1 and HDR 2, F-BID=2 is added to the TM after HDR 2, F-BID=3 is added to Data Block, F-BID=4 is added to the TM after the Data Block, F-BID=5 is added to EOF 1 and EOF 2, F-BID=6 is added to the TM after EOF 2, F-BID=7 is added to the TM after the TM, and F-BID=8 is added to the EOD.

As indicated by the third row in FIG. 3, the same F-BID (=3) is added to each block of the Data Block in the same file. The same F-BID (=1) is added to HDR 1 and HDR 2 in the same file, and the same F-BID (=5) is added to the EOF 1 and EOF 2 in the same file.

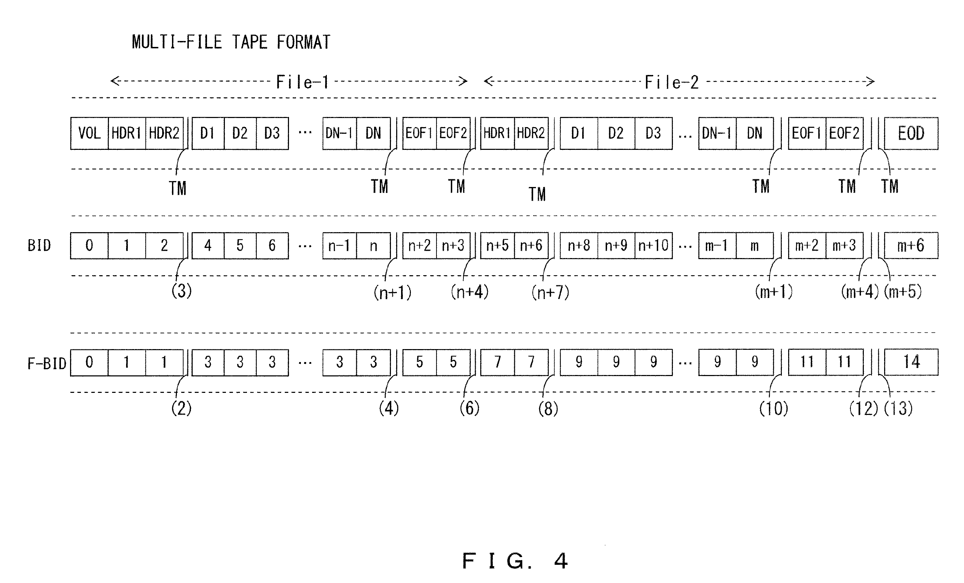

FIG. 4 illustrates a tape format, a BID, and an F-BID of a multi-file according to an embodiment.

The first row in FIG. 4 indicates the tape format of a multi-file, the second row indicates the BID, and the third row indicates the F-BID.

The tape format and the BID of a multi-file are similar to those illustrated in FIG. 2, and the explanation is omitted here.

The third row in FIG. 4 indicates the F-BID added to each block based on the update rule of the above-mentioned F-BID.

That is, F-BID=0 is added to the VOL. Relating to File-1, F-BID=1 is added to HDR 1 and HDR 2, F-BID=2 is added to the TM after HDR 2, F-BID=3 is added to Data Block, F-BID=4 is added to the TM after the Data Block, F-BID=5 is added to EOF 1 and EOF 2, F-BID=6 is added to the TM after EOF 2. Relating to File-2, F-BID=7 is added to HDR 1 and HDR 2, F-BID=8 is added to the TM after HDR 2, F-BID=9 is added to Data Block, F-BID=10 is added to the TM after the Data Block, F-BID=11 is added to EOF 1 and EOF 2, F-BID=12 is added to the TM after EOF 2. F-BID=13 is added to the TM after the final TM of File-2, and

F-BID=14 is added to the EOD.

### (First embodiment)

In the first embodiment, the embodiment using a virtual tape device is described below.

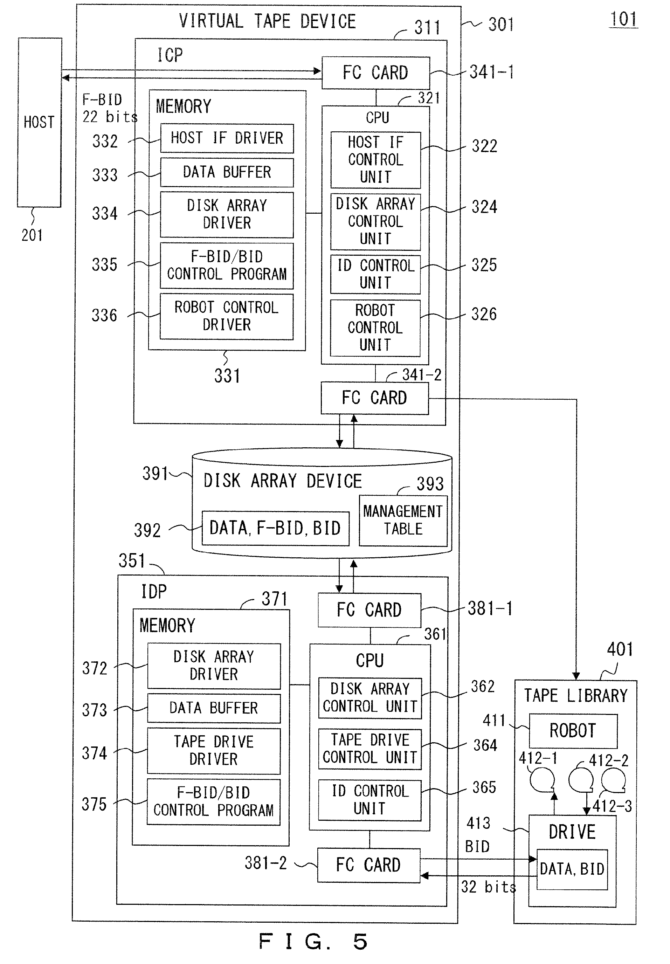

FIG. 5 illustrates a configuration of a system according to the first embodiment.

A system 101 according to the first embodiment includes a host (upper device) 201, a virtual tape device 301, and a tape library (actual tape device) 401.

The host 201 and the virtual tape device 301 are respectively connected to the virtual tape device 301 and the tape library 401 through an optical cable.

The system 101 according to the first embodiment uses a standardized 36 track tape format. For example, the 36 track tape format is described in JIS X6135, ISO/IEC 14251, and the file configuration is described in JIS X601.

The host 201 reads data of the tape volume from the virtual tape device 301, or transmits write data to the virtual tape device 301. The host 201 stores the F-BID information in which the F-BID indicating the position of the block on the tape is described, and the OS of the host 201 controls the write position or the read position using the F-BID when the block is read and written. The host 201 communicates with the virtual tape device 301 using the fiber channel. The host 201 is, for example, an information processing device such as a server, a personal computer (PC), etc.

The virtual tape device 301 is a device which virtually operates a tape on a disk array device. The virtual tape device 301 realizes a virtual tape device (drive) in the virtual tape device 301, and it seems to the host 201 that the host 201 is connected to a normal tape device. By arranging a tape volume on the disk array device, the mechanical operations of tape mounting, loading, unloading, etc. may be omitted, thereby performing high-speed processing.

The virtual tape device 301 includes an integrated channel processor (ICP) 311, an integrated device processor (IDP) 351, and a disk array device 391.

The ICP 311 is connected to the host 201, and controls the communication of data of a tape volume on the disk array device 391. The ICP 311 realizes the function of a virtual tape drive on the disk array device 391.

The ICP 311 includes a central processing unit (CPU) 321, memory 331, and fiber channel (FC) cards 341-1 and 341-2.

The CPU 321 is a processor (processing device) which reads a program from the memory 331, executes the program, and performs various processes.

The CPU 321 includes a host IF control unit 322, a disk array control unit 324, an ID control unit 325, and a robot control unit 326.

The host IF control unit 322 controls the communication of data with the host 201. The host IF control unit 322 is realized by the CPU 321 reading a host IF driver 332 from the memory 331, and executing the driver 332.

The disk array control unit 324 controls the disk array device 391, writes data to the disk array device 391, and reads data from the disk array device 391. In detail, when data is written to the disk array device 391, the disk array control unit 324 writes the block of a tape volume to a data buffer 333 before writing data to the disk array device 391, and after adding a BID and a F-BID to a block, reads the block of a tape volume from the data buffer 333 and writes the block to the disk array device 391. The disk array control unit 324 controls reading and writing data on a data buffer 333 and a disk array device 391 using a 22-bit F-BID. The disk array control unit 324 reads and writes data on the management table 393. The disk array control unit 324 is realized by the CPU 321 reading a disk array driver 334 from the memory 331 and executing the driver 334.

The ID control unit 325 adds (allocates) the F-BID and the BID to each block of a tape volume. The ID control unit 325 is realized by the CPU 321 reading an F-BID/BID control program 335 from the memory 331 and executing the program.

The robot control unit 326 controls a robot 411. The robot control unit 326 is realized by the CPU 321 reading a robot control driver 336 from the memory 331 and executing the driver 336.

The memory 331 is a storage device which stores data, a program, etc. The memory 333 is, for example, random access memory (RAM).

The memory 331 includes the host IF driver 332, the data buffer 333, the disk array driver 334, the F-BID/BID control program 335, and the robot control driver 336.

The host IF driver 332 is a program which controls the communication of data with the host 201.

The data buffer 333 is an area which temporarily stores data before writing data of a tape volume 392 to the disk array device 391.

The disk array driver 334 is a program which controls the disk array device 391.

The IDP F-BID/BID control program 335 is a program which adds (allocates) an F-BID and a BID to each block of a tape volume. In the first embodiment, the F-BID is assigned 22 bits, and the BID is assigned 32 bits.

The robot control driver 336 is a program which controls the robot 411.

An FC card 341 is an interface card connected to another device by a fiber channel. The FC card 341-1 is connected to the host 201. The FC card 341-2 is connected to the disk array device 391 and the tape library 401.

The IDP 351 stores a tape volume on the disk array device 391 in the tape library 401, reads the tape volume from the tape library 401, and restores the volume on the disk array device 391.

The IDP 351 includes a CPU 361, memory 371, and FC cards 381-1 and 381-2.

The CPU 361 is a processor (processing device) which reads a program from the memory 371, executes the program, and performs various processes.

The CPU 361 includes a disk array control unit 362, a tape drive control unit 364, and an ID control unit 365.

The disk array control unit 362 controls the disk array device 391, writes data to the disk array device 391, and reads data from the disk array device 391. The disk array control unit 362 controls reading and writing data on the disk array device 391 using a 32-bit BID. The disk array control unit 362 is realized by the CPU 361 reading a disk array driver 372 from the memory 371 and executing the driver 372.

The tape drive control unit 364 controls a drive 413, and controls the communication of data with the tape library 401. The tape drive control unit 364 controls the tape library 401 using a 32-bit BID. The tape drive control unit 364 is realized by the CPU 361 reading a tape drive driver 374 from the memory 371, and executing the driver 374.

The ID control unit 365 adds (assigns) an F-BID and a BID to each block of a tape volume. The ID control unit 365 is realized by the CPU 361 reading an F-BID/BID control program 375 from the memory 371, and executing the program 375.

The memory 371 is a storage device which stores data, a program, etc. The memory 371 is, for example, RAM.

The memory 371 includes the disk array driver 372, a data buffer 373, the tape drive driver 374, and the F-BID/BID control program 375.

The disk array driver 372 is a program which controls the disk array device 391.

The data buffer 373 is an area which temporarily stores data before writing the data of the tape volume 392 to the disk array device 391.

The tape drive driver 374 is a program which controls the drive 413, and control the communication of data with the tape library 401.

The F-BID/BID control program 375 adds (assigns) an F-BID and a BID to each block of a tape volume. In the first embodiment, the F-BID is assigned 22 bits, and the BID is assigned 32 bits.

An FC card 381 is an interface card connected to another device by a fiber channel. The FC card 381-1 is connected to the disk array device 391. The FC card 381-2 is connected to the tape library 401.

The disk array device 391 is a storage device including a plurality of magnetic disk devices (hard disk drive (HDD)).

The disk array device 391 stores the tape volume 392 and a management table 393.

The tape volume 392 is a data file corresponding to the data of one volume of virtual tape.

The format of the tape volume 392 is, for example, a tape format standardized as illustrated in FIGS. 3 and 4. The tape volume 392 includes a plurality of blocks and a BID and an F-BID added to each block.

The management table 393 is a table on which the correspondence among each block of the tape volume 392, a BID, and an F-BID of the tape volume 392. The management table 393 is described later in detail.

The tape library 401 includes the robot 411, a magnetic tape 412-i (i=1 through 3), and the drive 413.

The robot 411 is controlled by the robot control unit 326, and sets a magnetic tape 412 to be read or written on the drive 413.

The magnetic tape 412 is a recording medium which records data.

The drive 413 reads and writes data on the magnetic tape 412 set in the drive 413. The drive 413 transmits the data read from the magnetic tape 412 to an FC card, and writes the data received from the FC card to the magnetic tape 412.

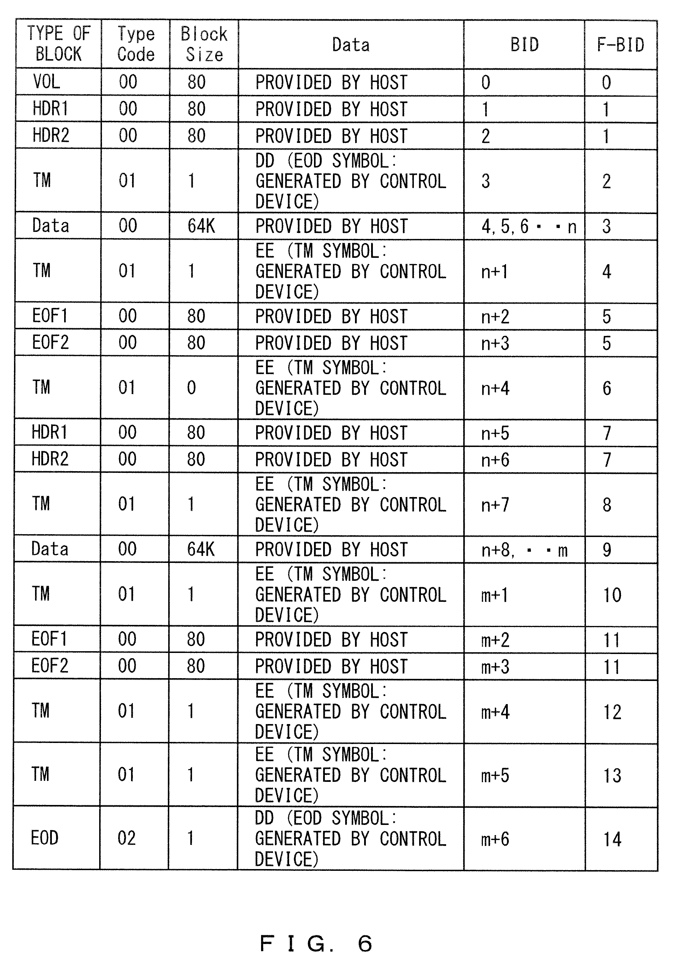

FIG. 6 is an example of a management table.

The management table 393 includes as items the type of block, type code, block size, data, BID, and F-BID. On the management table, the type of block, type code, block size, data, BID, and F-BID are associated and described.

The type of block indicates the kind of block.

The type code is a code indicating the type of block.

The block size indicates the size of a block.

The data is the information indicating a kind of block such as the data provided from the host, or the data generated by a control device (for example, a virtual tape device).

The BID is the number of a BID.

The F-BID is the number of an F-BID.

Described below are a read BID (RBID) command and a locate command used in the system 101 according to the first embodiment.

### · read BID command

In the first embodiment, when the virtual tape device 301 receives a read BID command from the 201, the BID information including a channel BID and a device BID is returned to the host 201.

The channel BID is the information about the proceeding between the host 201 and the virtual tape device 301, that is, the information about up to which block the host 201 has transmitted (the virtual tape device 301 receives the blocks). Concretely, the channel BID is the F-BID of the block finally received in the block of the tape volume received by the virtual tape device 301 from the host 201. That is, the F-BID of the final block in the data buffer 333.

The device BID is the information about the position of a tape head of the virtual tape device, and the information about the proceeding of the process between the ICP 311 and the disk array device 391, that is, the information about up to which block a writing process has been performed on the disk array device 391. Concretely, the device BID is the value obtained by adding 1 to the F-BID of the block (block finally written to the disk array device 391) immediately before the tape head.

For example, when the channel BID is 5, and the device BID is 3, the blocks up to F-BID=2 have been written to the disk array device 391, and the blocks up to F-BID=5 have been transmitted to the virtual tape device 301 from the host 201. That is, the blocks of F-BID=3, F-BID=4, and F-BID=5 have not been written, and remain in the data buffer 333 of the virtual tape device 301.

### · locate command

The locate command is to locate the tape head of the drive for a read and write at a specified position.

In the first embodiment, when the virtual tape device 301 receives the locate command from the host 201, the tape head of the virtual drive realized in the virtual tape device 301 up to the block position of the F-BID specified by the locate command is positioned. For example, when F-BID=5 is specified by the locate command, a virtual tape device 301 positions the tape head of the virtual drive between the block of F-BID=4 and the block of F-BID=5 of the tape volume 392.

Thus, the virtual drive writes or reads data on the block of F-BID=5.

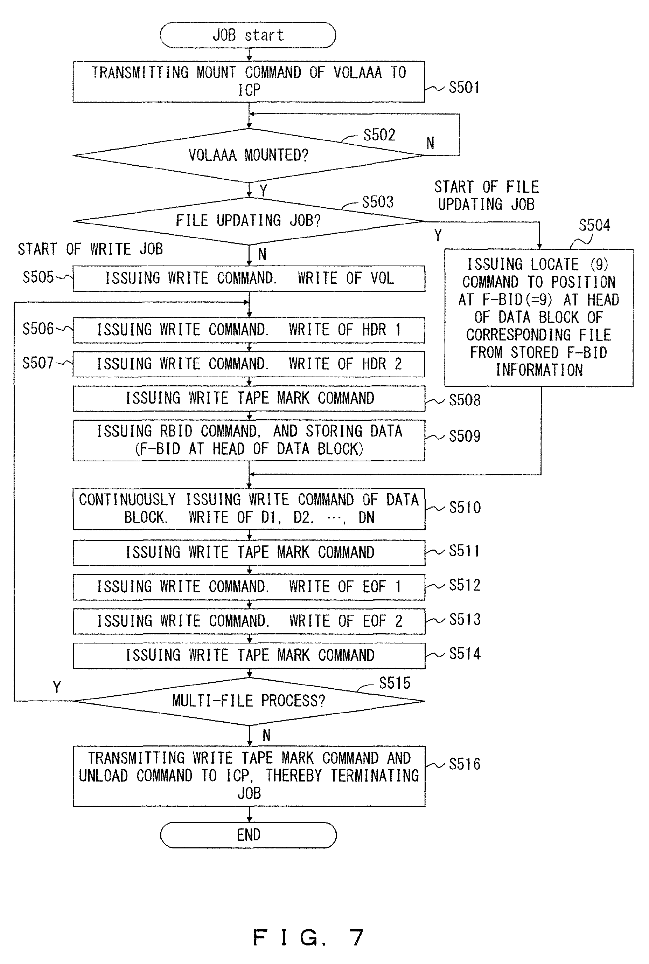

FIG. 7 is a flowchart of a writing process and an updating process of a host according to the first embodiment.

FIG. 7 illustrates the case in which the host 201 writes or updates data on the tape volume having the volume name of VOLAAA (hereafter referred to simply as VOLAAA).

In step S501, the host 201 transmits a mount command for VOLAAA to the ICP 311.

In step S502, the host 201 checks the notification from the ICP 311. When the host 201 receives a notification that the VOLAAA has been mounted, control is passed to step S503.

In step S503, if the job to be performed by the host 201 is a file updating job for updating a file, control is passed to step S504. If the job to be performed by the host 201 is not a file updating job (if the job to be performed is a write job for newly writing a file), control is passed to step S505.

In the file update in step S504, a tape volume is in a 2-file multi-tape format as illustrated in FIG. 4, and the File-2 is to be updated.

In step S504, the host 201 starts the file updating job, and issues to the ICP 311 a command to locate the tape head at the leading block of the data block of the file to be updated. In detail, the host 201 refers to the F-BID information stored previously, and issues to the ICP 311 a locate (9) command to locate the tape head at the leading block (F-BID=9) of the data block of the file to be updated. As illustrated in FIG. 4, since the F-BID of the leading block of the data block of the File-2 is 9, the host 201 issues the locate (9) command.

In step S505, the host 201 starts a write job, and issues a write command (write (VOL)) to write VOL.

In step S506, the host 201 issues a write command (write (HDR 1)) to write HDR 1.

In step S507, the host 201 issues a write command (write (HDR 2)) to write HDR 2.

In step S508, the host 201 issues a write tape mark command to write a TM.

In step S509, the host 201 issues an RBID command, and stores the F-BID received from the virtual tape device 301. The received F-BID is the F-BID of the leading block of the data block. The F-BID to be stored is the channel BID in the channel BID and the device BID included in the BID information received from the virtual tape device 301. The information about the F-BID stored in step S509 is, for example, used in a file updating job (step S504).

In step S510, the host 201 continuously issues write commands (write (D1), write (D2), -, write (DN)) to write the blocks of D1 through DN of the data block.

In step S511, the host 201 issues a write tape mark command to write a TM.

In step S512, the host 201 issues a write command (write (EOF 1)) to write EOF 1.

In step S513, the host 201 issues a write command (write (EOF 2)) to write an EOF 2.

In step S514, the host 201 issues a write tape mark command to write a TM.

In step S515, when multi-file processing is performed, control is returned to step S506. When the multi-file processing is not performed (single file process is performed), control is passed to step S516.

In step S516, the host 201 transmits to the ICP 311 a write tape mark command to write a TM and an unload command to perform an unloading operation, thereby terminating the job.

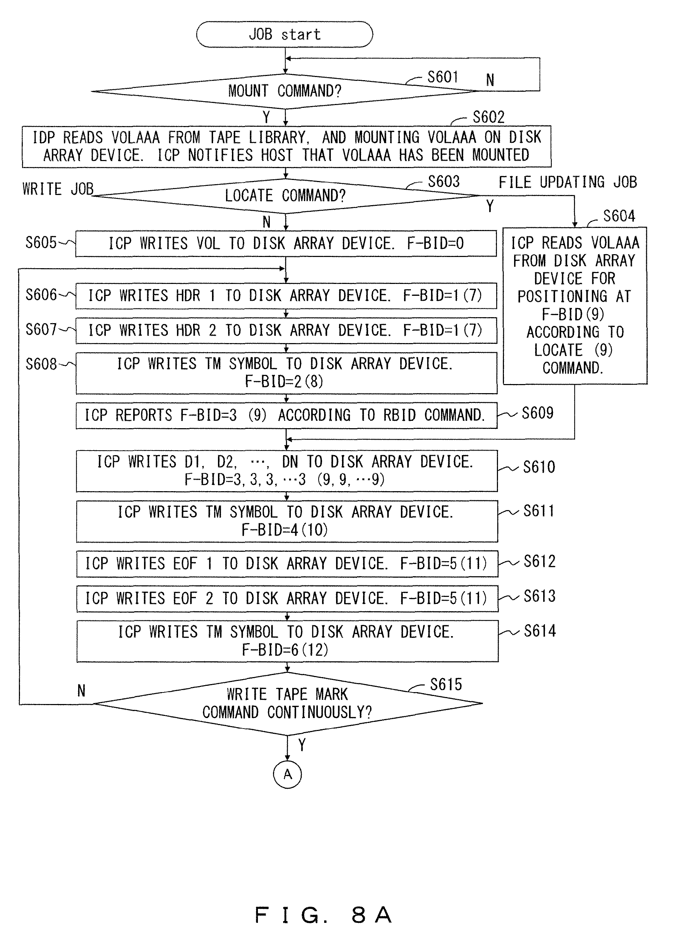

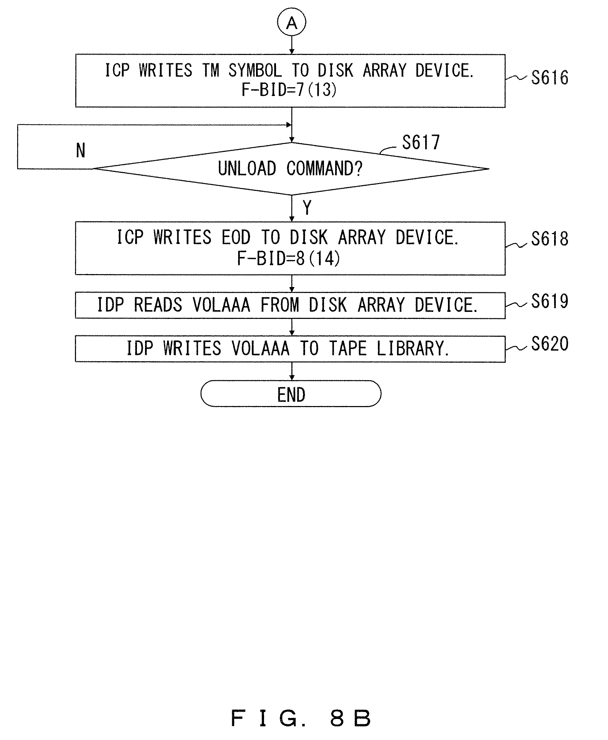

FIGs. 8A and 8B is a flowchart of a writing process and an updating process of a virtual tape device according to the first embodiment.

The writing process and the updating process of the virtual tape device when the process described with reference to FIG. 7 is performed by the host 201 are described with reference to FIGs. 8A and 8B.

In step S601, when a mount command is received from the host 201, control is passed to step S602.

In this process, it is assumed that the ICP 311 has received the mount command to mount a tape volume having the volume name of VOLAAA.

In step S602, the tape drive control unit 364 reads the tape volume having the volume name of VOLAAA from the tape library 401, and the disk array control unit 362 mounts the VOLAAA on the disk array device 391. The disk array control unit 324 notifies the host 201 that the VOLAAA has been mounted.

In step S603, when the locate command is received (when the host 201 performs a file updating job), control is passed to step S604. When a command other than the locate command is received (when the host 201 performs a write job), control is passed to step S605.

In step S604, assume that the host 201 performs the process in step S504 in FIG. 7.

In step S604, the disk array control unit 324 receives the locate (9) command, reads the VOLAAA from the disk array device 391, and positions the tape head at the block of F-BID=9. The tape head is the tape head of a drive (virtual drive) virtually provided on the disk array device 391 used in reading the VOLAAA.

In and after step S605, assume that the host 201 has performed the processes in and after step S505 in FIG. 7.

In step S605, the ID control unit 325 receives a write command (write (VOL)) to write a VOL, and adds a BID and an F-BID to the VOL. The disk array control unit 324 writes the VOL to the disk array device 391. As illustrated in FIGS. 3 and 4, BID=0 and F-BID=0 are added to the VOL.

In step S606, the ID control unit 325 receives a write command (write (HDR 1)) to the HDR 1, and adds the BID and the F-BID to the HDR 1. The disk array control unit 324 writes the HDR 1 to the disk array device 391. As illustrated in FIGS. 3 and 4, when the HDR 1 is the HDR 1 of the File-1, BID=1 and F-BID=1 are added, and when the HDR 1 is the HDR 1 of the File-2, BID=n+5 and F-BID=7 are added.

In step S607, the ID control unit 325 receives the write command (write (HDR 2)), and adds the BID and the F-BID to the HDR 2. The disk array control unit 324 writes the HDR 2 to the disk array device 391. As illustrated in FIGS. 3 and 4, when the HDR 2 is the HDR 2 of the Film-1, BID=2 and F-BID=1 are added, and when the HDR 2 is the HDR 2 of the File-2, BID=n+6 and F-BID=7 are added.

In step S608, the ID control unit 325 receives the write tape mark command to write the TM, and adds the BID and the F-BID to the TM. The disk array control unit 324 writes the TM to the disk array device 391. As illustrated in FIGS. 3 and 4, when the TM is the TM of the File-1, BID=3 and F-BID=2 are added, and when the TM is the TM of the File-2, BID=n+7 and F-BID=8 are added.

In step S609, the disk array control unit 324 receives an RBID command, and transmits the BID information to the host. In this process, the F-BID is used as BID information. The disk array control unit 324 transmits F-BID=3 as the BID information when the File-1 is being written. The disk array control unit 324 transmits F-BID=9 when the File-2 is being written. The F-BID to be transmitted is the F-BID indicating the block written to the disk array device 391, and corresponds to the channel BID.

In step S610, the ID control unit 325 receives the write command (write (D1)), write (D2), ∼, and write (DN)) to write the blocks from D1 to DN of a data block, and adds the BID and the F-BID to each data block. The disk array control unit 324 writes the data blocks D1 through DN to the disk array device 391. When the data block of the File-1 is written as illustrated in FIGS. 3 and 4, BID=4-n and F-BID=3 are added. When the data block of File-2 in FIG. 4 is written, BID=n+8∼m, and F-BID=9 are added.

In step S611, the ID control unit 325 receives the write tape mark command to write a TM, and the BID and the F-BID are added to the TM. The disk array control unit 324 writes the TM to the disk array device 391. As illustrated in FIGS. 3 and 4, when the TM is the TM after the data block of the File-1, BID=n+1 and F-BID=4 are added, and when the TM is the TM after the data block of the File-2, BID=m+1 and F-BID=10 are added.

In step S612, the ID control unit 325 receives the write command (write (EOF 1)) to writes the EOF 1, and adds the BID and the F-BID to the EOF 1. The disk array control unit 324 writes the EOF 1 to the disk array device 391. As illustrated in FIGS. 3 and 4, when the EOF 1 is the EOF 1 of the File-1, BID=n+2 and F-BID=5 are added, and when the EOF 1 is the EOF 1 of the File-2, BID=m+2 and F-BID=11 are added.

In step S613, the ID control unit 325 receives the write command (write (EOF 2)) to write the EOF 2, and adds the BID and the F-BID to the EOF 2. The disk array control unit 324 writes the EOF 2 to the disk array device 391. As illustrated in FIGS. 3 and 4, when the EOF 2 is the EOF 2 of the Film-1, BID=n+3 and F-BID=5 are added, and when the EOF 2 is the EOF 2 of the File-2, BID=m+3 and F-BID=11 are added.

In step S614, the ID control unit 325 receives the write tape mark command to write the TM, and adds the BID and the F-BID to the TM. The disk array control unit 324 writes the TM to the disk array device 391. As illustrated in FIGS. 3 and 4, when the TM is the TM after the EOF 2 of the Film-1, BID=n+4 and F-BID=6 are added, and when the TM is the TM after the EOF 2 of the File-2, BID=m+4 and F-BID=12 are added.

In step S615, when the write tape mark command to write a TM is received, control is passed to step S616, and when a command (write command) other than the write tape mark command is extracted, control is returned to step S606.

In step S616, the ID control unit 325 receives the write tape mark command to write a TM, and adds a BID and an F-BID. The disk array control unit 324 writes the TM to the disk array device 391. When a single file tape format is applied as illustrated in FIG. 3, BID=n+5 and F-BID=7 are added, and when a multi-file tape format is applied as illustrated in FIG. 4, BID=m+5 and F-BID=13 are added.

When an unload command is received in step S617, control is passed to step S618.

In step S618, the ID control unit 325 receives an unload command, and a BID and an F-BID are added to the EOD. The disk array control unit 324 writes the EOD to the disk array device 391. When the single file tape format is applied as illustrated in FIG. 3, BID=n+6 and F-BID=8 are added, and when the multi-file tape format is applied as illustrated in FIG. 4, BID=m+6 and F-BID=14 are added.

In step S619, the disk array control unit 362 reads a VOLAAA from the disk array device 391.

In step S620, the tape drive control unit 364 writes the VOLAAA to the magnetic tape 412 of the tape library 401. In detail, the tape drive control unit 364 writes to the magnetic tape 412 each block of the VOLAAA and the BID added to each block. The tape drive control unit 364 does not write an F-BID to the magnetic tape 412. The BID may be stored in the disk array device 391, of the ID control unit 365 may add a BID to each block when a write is performed to the magnetic tape 412.

Described next is an error recovery process when a write error occurs according to the first embodiment.

First, the process of writing a tape volume to the disk array device 391 of the disk array control unit 324 is described in detail.

First, the disk array control unit 324 writes the data of the tape volume received from the host 201 and the block generated by the disk array control unit 324 to the data buffer 333.

The ID control unit 325 adds a BID and an F-BID to each block of the tape volume in the data buffer 333.

The disk array control unit 324 reads each block of a tape volume from the data buffer 333, and writes the block to the disk array device 391.

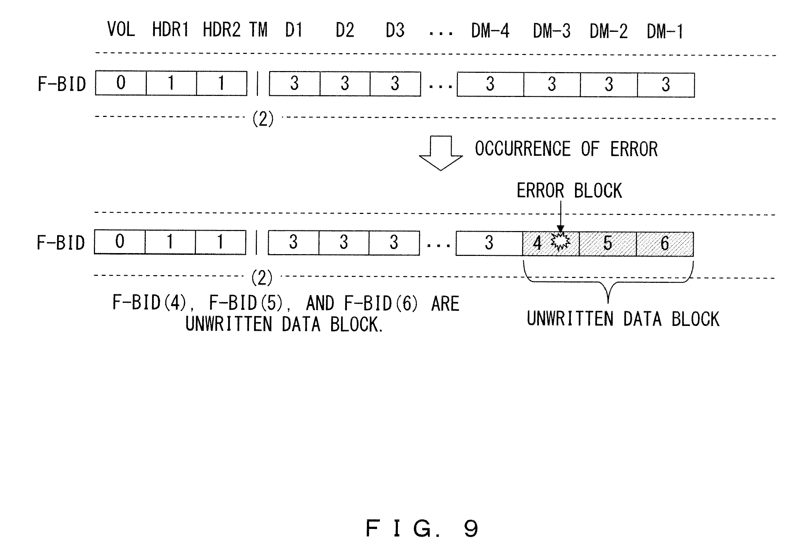

FIG. 9 illustrates an F-BID of a data buffer before detecting a write error and when detecting a write error.

The upper part of FIG. 9 illustrates an F-BID before detecting a write error, and the lower part illustrates an F-BID when detecting a write error.

It is assumed that the data buffer 333 stores the blocks from VOL to DM-1, and the F-BID as illustrated at the upper part of FIG. 9 is added. As illustrated at the upper part of FIG. 9, F-BID=3 is added to the data block (D 1 through DM-1).

The disk array driver 334 writes data to the disk array device 391 in order from the head of the tape volume, and a write error has occurred when data is written to the disk array device 391 of the block DM-3.

The ID control unit 325 updates the F-BID of the data buffer 333 so that the F-BID may be incremented by 1 for each block in order from the block in which an error has occurred.

Thus, as illustrated at the lower part of FIG. 9, the F-BID is updated so that the F-BID is incremented by 1 for each block from the error block (DM-3). That is, F-BID=4, 5, 6 is added to the blocks DM-3, DM-2, and DM-1.

Since the blocks (DM-3 through DM-1) of F-BID=4 through 6 have not been written to the disk array device 391 yet, they are unwritten data (blocks).

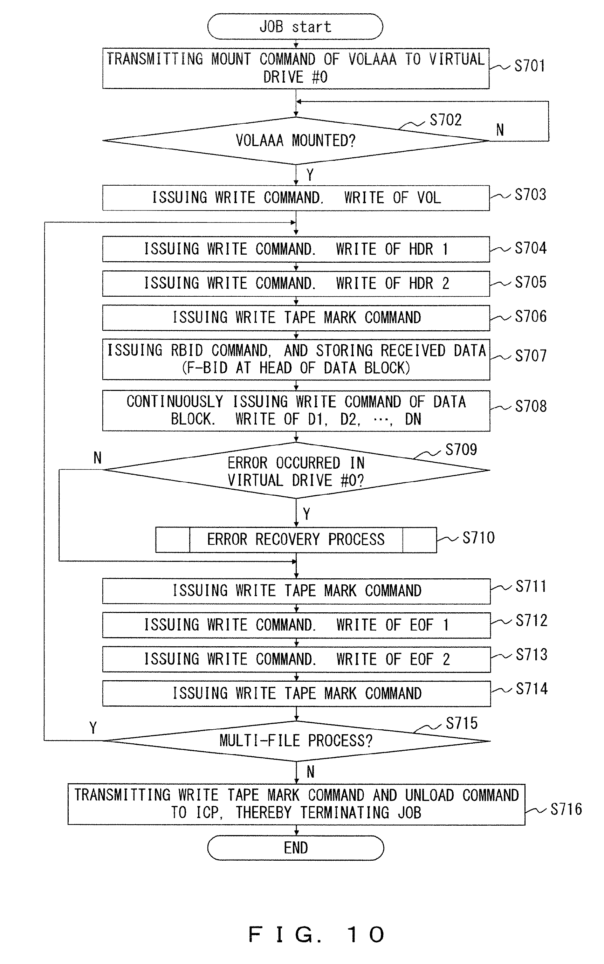

FIG. 10 illustrates the process of a host when a write error occurs according to the first embodiment.

In this example, the host 201 writes the tape volume having the volume name of VOLAAA using a virtual drive #0 provided on the disk array device 391.

In step S701, the host 201 transmits the mount command of VOLAAA to the virtual drive #0, that is, to the ICP 311 which realizes the virtual drive #0.

In step S702, the host 201 checks the notification from the ICP 311, and if a notification that the VOLAAA has been mounted on the virtual drive #0 is received, control is passed to step S703.

In step S703, the host 201 starts a write job, and issues a write command (write (VOL)) to write a VOL.

In step S704, the host 201 issues a write command (write (HDR 1)) to write an HDR 1.

In step S705, the host 201 issues a write command (write (HDR 2)) to write an HDR 2.

In step S706, the host 201 issues a write tape mark command to write a TM.

In step S707, the host 201 issues an RBID command, and stores an F-BID received from the virtual tape device 301. The received F-BID is an F-BID of the leading block of a data block. The stored F-BID is a channel BID in the channel BID and the device BID included in the BID information received from the virtual tape device 301.

In step S708, the host 201 continuously issues a write command (write (D1), write (D2), ∼, write (DN)) to write a block from D1 through DN of the data block.

In step S709, when an error occurs in the virtual drive #0, control is passed to step S710, and when no error occurs, control is passed to step S711. If an error occurs, the host 201 suspends issuing a write command.

In step S710, the host 201 performs an error recovery process. The error recovery process is described later in detail. Assume that the host 201 has suspended issuing a write command to write blocks of and after the DM of the data block.

In step S711, the host 201 issues a write tape mark command to write a TM.

In step S712, the host 201 issues a write command (write (EOF 1)) to write an EOF 1.

In step S713, the host 201 issues a write command (write (EOF 2)) to write an EOF 2.

In step S714, the host 201 issues a write tape mark command to write a TM.

In step S715, when a multi-file process is performed, control is returned to step S506, and when the multi-file process is not performed (a single file process is performed), control is passed to step S516.

In step S716, the host 201 transmits to the ICP 311 a write tape mark command to write a TM and an unload command to perform unloading, thereby terminating the job.

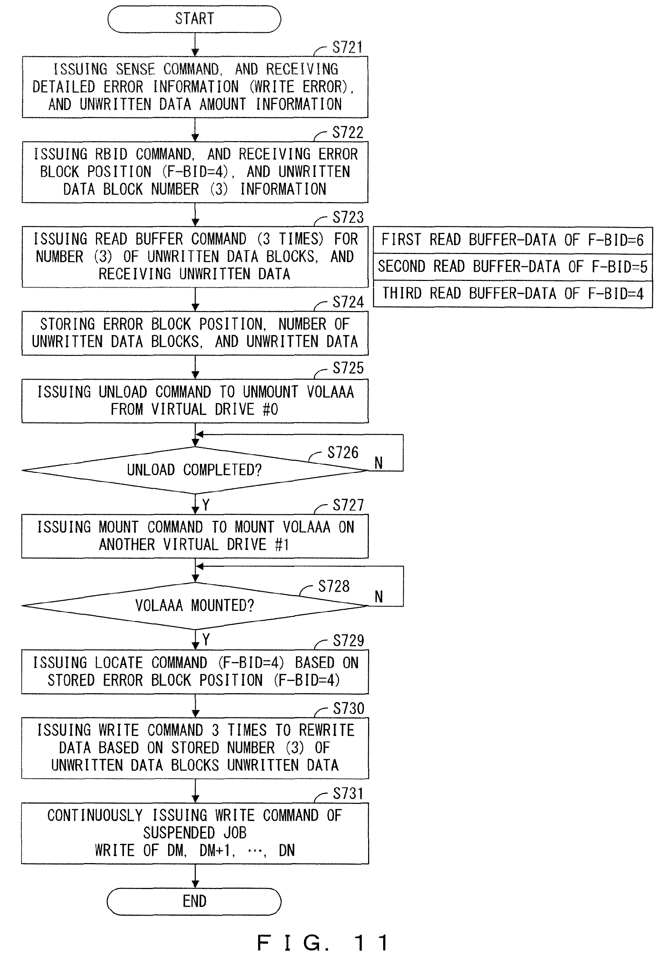

FIG. 11 is a detailed flowchart of the error recovery process according to the first embodiment.

FIG. 11 corresponds to step S710 in FIG. 10.

With reference to FIG. 11, the case in which a write error has occurred, and an F-BID has been updated as illustrated in FIG. 9 is described.

In step S721, the host 201 issues a sense command, and receives from the virtual tape device 301 detailed error information (write error) and the amount of data not yet written as sense information.

In step S722, the host 201 issues an RBID command, and receives the position of a block (error block) in which an error has occurred (that is, F-BID (=4) of an error block) and unwritten data block number information (=3). The F-BID of the error block is a device BID included in the BID information received from the virtual tape device 301.

In step S723, the host 201 issues a read buffer command for each of the unwritten data blocks (that is, issuing the read buffer command three times), and receives the unwritten data from the virtual tape device 301.

Described below is a read buffer command.

Upon receipt of the read buffer command, the virtual tape device 301 transmits to the host 201 the data for one block in order from a larger F-BID of unwritten data (that is, the data unwritten in the disk array device 391) existing in the data buffer 333 of the virtual tape device 301.

The host 201 receives the data of the block of F-BID=6 by the issue of the first read buffer command, the data of the block of F-BID=5 by the issue of the second read buffer command, and the data of the block of F-BID=4 by the third issue of the read buffer command.

In step S724, the host 201 stores in the host 201 the error block position, the unwritten data block number information, and the unwritten data.

In step S725, the host 201 issues to the virtual tape device 301 an unload command to unmount the VOLAAA from the virtual drive #0.

In step S726, when the host 201 receives a notification of the completion of an unmounting process from the virtual tape device 301, control is passed to step S727.

In step S727, the host 201 transmits to the ICP 311 the mount command to mount the VOLAAA to another virtual drive #1.

In step S728, the host 201 checks the notification from the ICP 311. When the host 201 receives a not that the VOLAAA has been mounted to the virtual drive #1, control is passed to step S729.

In step S729, the host 201 issues a locate command (locate (4)) to position the tape head of the virtual drive #1 at the error block position according to the stored error block position (F-BID=4).

In step S730, the host 201 issues a write command to write unwritten data for unwritten data block number information (that is, three times) based on the stored unwritten data block number information and the unwritten data. In detail, the host 201 issues the first write command to write unwritten data of F-BID=4, the second write command to write unwritten data of F-BID=5, and the third write command to write unwritten data of F-BID=6.

In step S731, the host 201 continuously issues the write command of suspended jobs, that is, the write command ((write (DM), write (DM+1), ∼, write (DN)) to write the DM through DN of the data block.

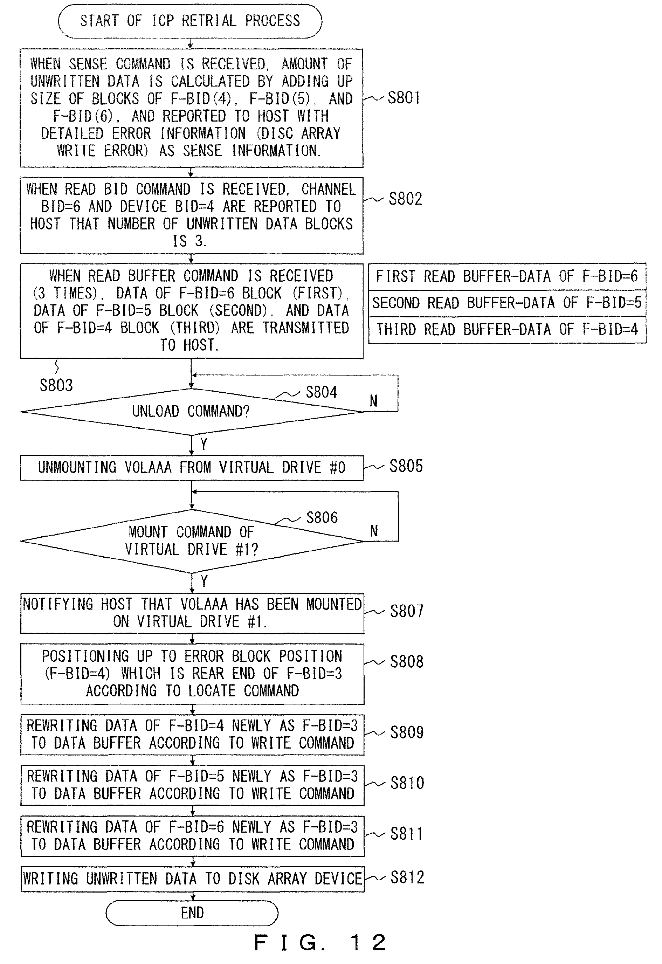

FIG. 12 is a flowchart of the error recovery process of the virtual tape device according to the first embodiment of the present invention.

FIG. 12 illustrates the process of the virtual tape device 301 when the host 201 performs the error recovery process in FIG. 11.

First, the data buffer 333 of the virtual tape device 301 stores the data of the tape volume to which the F-BID as illustrated at the upper part of FIG. 9 is added.

As described above with reference to FIG. 9, when a write error occurs, the ID control unit 325 updates the F-BID to increment the F-BID by 1 for each block in order from the block in which an error of a tape volume of the data buffer 333 occurs.

Thus, the data of the tape volume to which the F-BID as illustrated at the lower part of FIG.9 is stored in the data buffer 333.

As described above with reference to FIG. 9, assume that an error has occurred in the block of F-BID=4, and the blocks of F-BID=4 through 6 are unwritten to the disk array device 391.

In step S801, the disk array control unit 324 receives a sense command, and calculates a total size (amount of unwritten data) of the unwritten data (that is, the blocks of F-BID=4 through 6) for the disk array device 391. The disk array control unit 324 notifies the host 201 of the amount of unwritten data and the detailed error information (write error) as sense information.

In step S802, the disk array control unit 324 receives an RBID command, notifies the host 201 of the channel BID (=6) and the device BID (=4) as BID information, and notifies the host 201 of the number of unwritten data blocks (=3). The channel BID and the device BID are represented by the number of an F-BID.

In step S803, the disk array control unit 324 receives the read buffer command three times, transmits to the host 201 the data of the block of F-BID=6 in response to the first read buffer command, transmits to the host 201 the data of the block of F-BID=5 in response to the second read buffer command, and transmits to the host 201 the data of the block of F-BID=4 in response to the third read buffer command.

In step S804, when the virtual tape device 301 receives an unload command for the VOLAAA of the virtual drive #0, control is passed to step S805.

In step S805, the disk array control unit 324 unmounts the VOLAAA from the virtual drive #0.

In step S806, when the virtual tape device 301 receives a mount command of the VOLAAA to the virtual drive #1, control is passed to step S807.

In step S807, the disk array control unit 324 mounts the VOLAAA to the virtual drive #1, and notifies the host 201 that the VOLAAA has been mounted to the virtual drive #1.

In step S808, the disk array control unit 324 receives a locate command (locate (4)), and positions the tape head of the virtual drive #1 between the block at the end of F-BID=3 and the error block (F-BID=4).

In step S809, the disk array control unit 324 receives a write command to write unwritten data of F-BID=4, and rewrites (overwrites) the unwritten data to the data buffer 333. The ID control unit 325 adds F-BID=3 to the unwritten data. Additionally, the ID control unit 325 adds a BID to the unwritten data.

In step S810, the disk array control unit 324 receives a write command to write unwritten data of F-BID=5, and rewrites (overwrites) the unwritten data to the data buffer 333. The ID control unit 325 adds F-BID=3 to the unwritten data. Furthermore, the ID control unit 325 adds a BID to the unwritten data.

In step S811, the disk array control unit 324 receives a write command to write unwritten data of F-BID=6, and rewrites (overwrites) the unwritten data to the data buffer 333. The ID control unit 325 adds F-BID=3 to the unwritten data. In addition, the ID control unit 325 adds a BID to the unwritten data.

In steps S809 through S811, the ID control unit 325 adds F-BID according to the update rule of the F-BID described above with reference to FIGS. 3 and 4. Thus, the ID control unit 325 adds to unwritten data the same F-BID as the F-BID (=3) added to the unwritten data before an error occurs.

In step S812, the disk array control unit 324 writes unwritten data to the disk array device 391. In detail, the disk array control unit 324 writes to the disk array device 391 the unwritten data stored in the data buffer 333 in steps S809 through S811. The unwritten data includes newly added F-BID and BID.

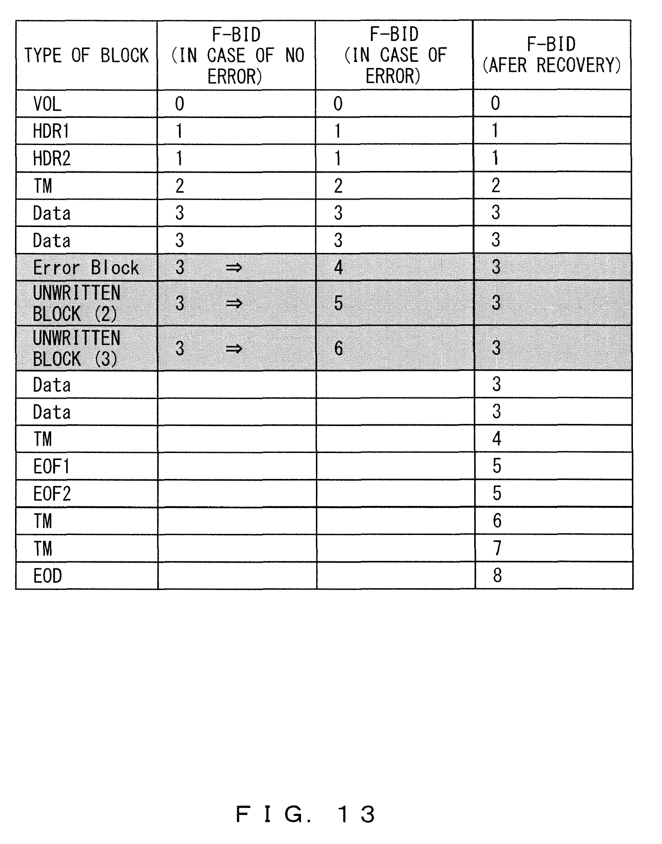

FIG. 13 illustrates the F-BID on the data buffer when there is no error, when an error occurs, and after error recovery is performed.

The third column from the right of FIG. 13 illustrates the F-BID when there is no error, the second column from the right illustrates the F-BID when an error occurs, and the first column from the right illustrates the F-BID after error recovery is performed.

As illustrated in the third column from the right of FIG. 13, unless an error block occurs, the same F-BID (=3) is added to the data block.

As illustrated in the second column from the right of FIG. 13, when an error occurs, the error block and the subsequent unwritten block increase in number of F-BID for each block.

As indicated in the first column from the right of FIG. 13, after the after error recovery, that is, after the error block and the unwritten block are rewritten, the same F-BID (=3) as another data block is added as in the time when there is no error.

According to the system of the first embodiment, since an F-BID is used when the disk array device performs control between the virtual tape device and the host, the host may manage a tape volume of 137 GB or more.

According to the system of the first embodiment, data of 137 GB or more may be processed although a tape volume over 137 GB is copied or exported using the OS (F-BID 22 bit control) for control of a 36 track tape format.

According to the system of the first embodiment, a block position of a TM may be specified although a tape volume over 137 GB is copied or exported using the OS (F-BID 22 bit control) for control of a 36 track tape format.

According to the system of the first embodiment, when a write error at the position (area over 137 GB) over the capacity which may be managed by the OS using the 22-bit BID when the OS (F-BID 22 bit control) for control of a 36 track tape format is used, the error block position and the subsequent unwritten block position may be specified, thereby recovering the error.

### (Second embodiment)

The embodiment using a tape control device is explained according to the second embodiment.

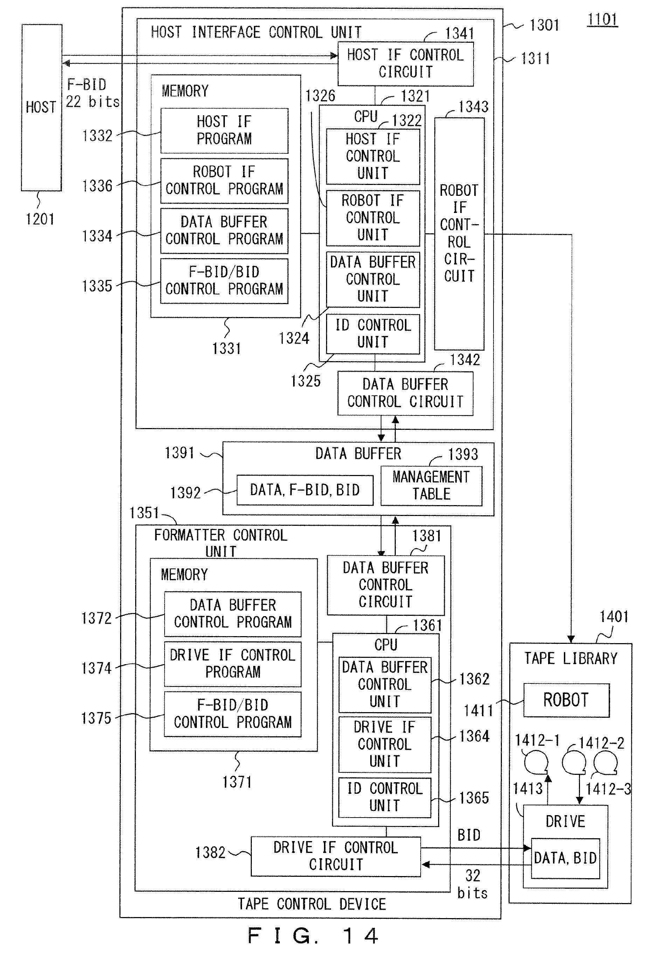

FIG. 14 is a configuration of the system according to the second embodiment.

A system 1101 according to the second embodiment includes the host (upper device) 1201, the tape control device 1301, and a tape library (actual tape device) 1401.

The host 1201 is connected to the tape control device 1301, and the tape control device 1301 is connected to the tape library 1401 through an optical cable.
the system 1101 according to the second embodiment uses a standardized 36 track tape format. For example, the 36 track tape format is described in JIS X6135 and ISO/IEC 13251, and the file configuration is described in JIS X601.

The host 1201 reads data from the tape library 1401 through the tape control device 1301, or transmits write data to the tape library 1401 through the tape control device 1301. The host 1201 stores the F-BID information in which the F-BID indicating the position of the block on the tape, and the OS of the host 1201 controls the write position and the read position using the F-BID when a block is read and written. The host 1201 communicates with the tape control device 1301 using a fiber channel. The host 1201 is an information processing device such as a server, a personal computer (PC), etc.

The tape control device 1301 is a device which controls the tape library 1401.

The tape control device 1301 includes a host interface control unit 1311, a formatter control unit 1351, and a data buffer 1391.

The host interface control unit 1311 is connected to the host 1201, and controls the communication of data of a tape volume on the data buffer 1391.

The host interface control unit 1311 includes a CPU 1321, memory 1331, a host IF control circuit 1341, a data buffer control circuit 1342, and a robot IF control circuit 1343.

The CPU 1321 is a processor which reads and executes a program from the memory 1331, and performs various processes.

The CPU 1321 includes a host IF control unit 1322, a data buffer control unit 1324, an ID control unit 1325, and a robot IF control unit 1326.

The host IF control unit 1322 controls the host IF control circuit 1341, and controls the communications of data with the host 1201 through the host IF control circuit 1341. The host IF control unit 1322 is realized by the CPU 1321 reading the host IF program 1332 from the memory 1331 and executing the program.

The data buffer control unit 1324 controls the data buffer control circuit 1342, and writes data to the data buffer 1391 and reads data from the data buffer 1391 through the data buffer control circuit 1342. The data buffer control unit 1324 controls a read and a write of the data buffer 1391 using a 22-bit F-BID. The data buffer control unit 1324 also reads and writes data on a management table 1393. The data buffer control unit 1324 is realized by the CPU 1321 reading a data buffer control program 1334 from the memory 1331, and executing the program.

The ID control unit 1325 adds (allocates) an F-BID and a BID to each block of a tape volume. The ID control unit 1325 is realized by the CPU 1321 reading an F-BID/BID control program 1335 from the memory 1331 and executing the program.

The robot IF control unit 1326 controls the robot IF control circuit 1343, and controls a robot 1411 through the robot IF control circuit 1343. The robot IF control unit 1326 is realized by the CPU 1321 reading a robot IF control program 1336 from the memory 1331, and executing the program.

The memory 1331 is a storage device which stores data, a program, etc. The memory 1331 is, for example, RAM.

The memory 1331 includes a host IF program 1332, the data buffer control program 1334, the F-BID/BID control program 1335, and the robot IF control program 1336.

The host IF program 1332 is a program which controls the host IF control circuit 1341 and controls the communication of data with the host 1201.

The data buffer control program 1334 is a program which controls the data buffer control circuit 1342, and controls a read and a write of data of the data buffer 1391.

The F-BID/BID control program 1335 adds (allocates) an F-BID and a BID to each block of the tape volume. In the second embodiment, it is assumed that the F-BID is assigned 22 bits, and the BID is assigned 32its.

The robot IF control program 1336 is a program which controls the robot 1411.

The host IF control circuit 1341 controls the communication of data with the host 1201.

The data buffer control circuit 1342 controls a read and a write of data of the data buffer 1391.

The robot IF control circuit 1343 controls the robot 1411.

The formatter control unit 1351 includes a CPU 1361, memory 1371, a data buffer control circuit 1381, and a drive IF control circuit 1382.

The CPU 1361 is a processor (processing device) which reads a program from the memory 1371, executes the program, and performs various processes.

The CPU 1361 includes a data buffer control unit 1362, a drive IF control unit 1364, and an ID control unit 1365.

The data buffer control unit 1362 controls a data buffer control circuit 1381, and writes data to the data buffer 1391 and reads data from the data buffer 1391 through the data buffer control circuit 1381. The data buffer control unit 1362 controls a read and a write of the data buffer 1391 using a 32-bit BID. The data buffer control unit 1362 is realized by the CPU 1361 reading a data buffer control program 1372 from the memory 1371 and executing the program.

The drive IF control unit 1364 controls a drive IF control circuit 1382, controls a drive 1413 through the drive IF control circuit 1382, and controls the communication of data with the tape drive 1401. The drive IF control unit 1364 controls a read and a write of the tape library 1401 using a 32-bit BID. The drive IF control unit 1364 is realized by the CPU 1361 reading a drive IF control program 1374 from the memory 1371 and executing the program.

The ID control unit 1365 adds (allocates) an F-BID and BID to each block of a tape volume. The ID control unit 1365 is realized by the CPU 1361 reading a F-BID/BID control program 1375 from the memory 1371, and executing the program.

The memory 1371 is a storage device which stores data, a program, etc. The memory 1371 is, for example, RAM.

The memory 1371 includes the data buffer control program 1372, the drive IF control program 1374, and the F-BID/BID control program 1375.

The data buffer control program 1372 is a program which controls the data buffer control circuit 1381, and controls a read and a write of data of the data buffer 1391.

The drive IF control program 1374 is a program which controls the drive IF control circuit 1382, and controls the communication of data with the tape drive 1401.

The F-BID/BID control program 1375 is a program which adds (allocates) an F-BID and a BID to each block of a tape volume. In the second embodiment, the F-BID is assigned 22 bits, and the BID is assigned 32 bits.

The data buffer control circuit 1381 controls a read and a write of data of the data buffer 1391.

The drive IF control circuit 1382 controls the drive 1413, and controls the communication of data with the tape library 1401.

The data buffer 1391 is a storage device which stores data. The data buffer 1391 is, for example, RAM. The data buffer 1391 stores a tape volume 1392 and a management table 1393.

The format of the tape volume 1392 is, for example, a standardized tape format as illustrated in FIGS. 3 and 4. The tape volume 1392 includes a plurality of blocks and a BID and an F-BID added to each block.

The management table 1393 is a table describing the correspondence among each block, a BID, and an F-BID of the tape volume 1392. Since the management table 1393 is similar to the management table 393 according to the first embodiment, the explanation of the table is omitted here.

The tape library 1401 includes the robot 1411, a magnetic tape 1412-i (i=1 through 3), and the drive 1413.

The robot 1411 is controlled by the robot IF control unit 1326, and sets the magnetic tape 1412 for a read or a write on the drive 1413.

The magnetic tape 1412 is a recording medium on which data is recorded.

The drive 1413 reads or writes data on the magnetic tape 1412 set on the drive 1413. The drive 1413 transmits the data read from the magnetic tape 1412 to the drive IF control circuit 1382, and writes the data received from the drive IF control circuit 1382 to the magnetic tape 1412.

Described below are the read BID (RBID) command and the locate command used in the system 1101 according to the second embodiment.

### • read BID command

In the second embodiment, when the tape control device 1301 receives the read BID command from the host 1201, the device returns the BID information including a channel BID and a device BID to the host 1201.

The channel BID is the information about the proceeding between the host 1201 and the tape control device 1301, that is, the information about which block the host 1201 has transmitted (to the tape control device 1301). Concretely, the channel BID is the F-BID of the block which has last been received by the tape control device 1301 in the blocks of the tape volume received from the host 1201. That is, it is the F-BID of the final block of the tape volume in the data buffer 1391.

The device BID is the information about the position of the tape head of the drive 1413, and the information about the proceeding of the process between the tape control device 1301 and the tape library 1401, that is, the information about which block has been written to the tape library 1401. Concretely, the device BID is the F-BID corresponding to the BID obtained by adding 1 to the BID of the block (last written to the tape library 1401) immediately before the tape head.

For example, when the channel BID is 5, and the device BID is 3, the blocks up to F-BID=2 have been written to the tape library 1401, and the blocks up to F-BID=5 have been transmitted from the host 1201 to the tape control device 1301. That is, the blocks of F-BID=3, F-BID=4, and F-BID=5 have not been written, and remain in the data buffer 1393 of the tape control device 1301.

### • locate command

The locate command is to locate the tape head of the drive for a read and a write at the specified position.

In the second embodiment, when the tape control device 1301 receives the locate command from the host 1201, the tape head of the drive 1413 is positioned to the block position of the BID corresponding to the F-BID specified by the locate command. For example, when F-BID=5 is specified by the locate command, the drive IF control unit 1364 locates the tape head between the block of the BID corresponding to F-BID=4 and the block of the BID corresponding to F-BID=5 of the tape volume of the magnetic tape 1412. The BID corresponding to the F-BID may be acquired by referring to the management table 1393.

Thus, the drive 1413 performs a write or a read on the block of the BID corresponding to F-BID=5.

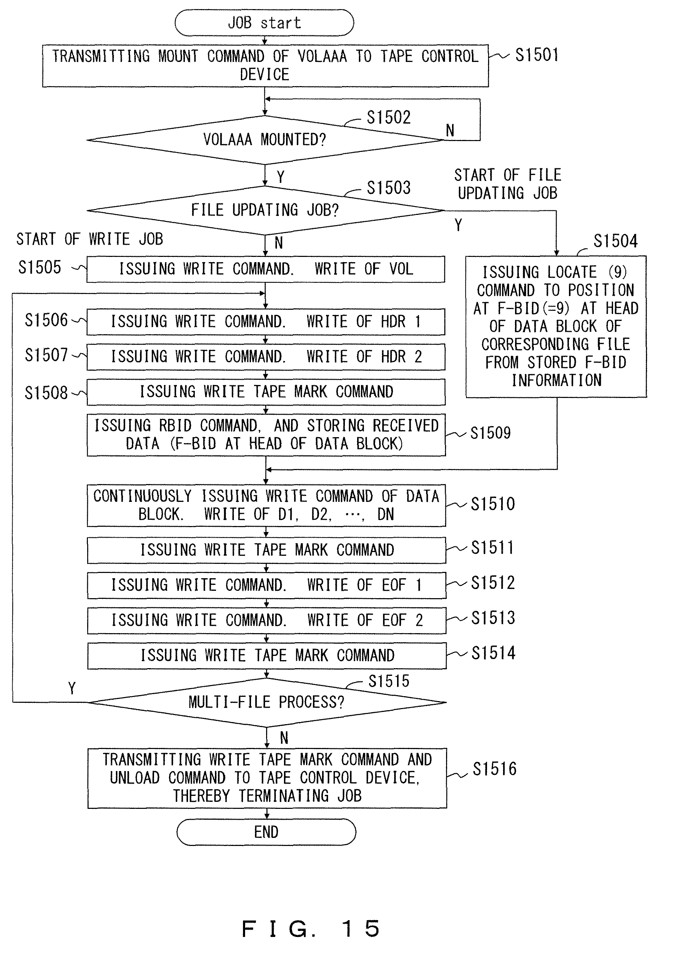

FIG. 15 is a flowchart of a writing process and an updating process of a host according to the second embodiment.

In FIG. 15, the host 1201 writes or updates a tape volume having the volume name of VOLAAA (hereafter referred to simply as VOLAAA).

In step S1501, the host 1201 transmits a mount command of the VOLAAA to the host interface control unit 1311.

In step S1502, the host 1201 checks the notification from the host interface control unit 1311, and if the VOLAAA mounted notification is received, control is passed to step S1503.

In step S1503, if the job to be performed by the host 1201 is a file updating job for updating a file, control is passed to step S1504. If the job to be performed by the host 1201 is not a file updating job (if the job to be performed is a write job for newly writing a file), control is passed to step S 1505.

In the file updating process in step S1504, the tape volume is in a multi-file tape format of two files as illustrated in FIG. 4, and the process of updating File-2 is described below.

In step S1504, the host 1201 starts the file updating job, and issues to the host interface control unit 1311 a command to position the tape head at the leading block of the data block of the file to be updated. In detail, the host 1201 refers to the previously stored F-BID information, and issues a locate (9) command to the host interface control unit 1311 to position the tape head at the leading block (F-BID=9) of the data block of the file to be updated. As illustrated in FIG. 4, since the F-BID of the leading block of the data block of File-2 is 9, the host 1201 issues the locate (9) command.

In step S1505, the host 1201 starts the write job, and issues a write command (write (VOL)) to write a VOL.

In step S1506, the host 1201 issues a write command (write (HDR 1)) to write HDR 1.

In step S1507, the host 1201 issues a write command (write (HDR 2)) to write HDR 2.

In step S 1508, the host 1201 issues a write tape mark command to write a TM.

In step S1509, the host 1201 issues an RBID command, and stores the F-BID received from the tape control device 1301. The received F-BID is an F-BID of the leading block of the data block. The stored F-BID is a channel BID in the channel BID and the device BID included in the BID information received from the tape control device 1301. The information about the F-BID stored in step S1509 is used in, for example, the file updating job (step S1504).

In step S1510, the host 1201 continuously issues the write command (write (D1)), ∼, write (DN)) to write the blocks from D1 through DN of the data block.

In step S1511, the host 1201 issues a write tape mark command to write a TM.

In step S1512, the host 1201 issues a write command (write (EOF 1)) to write an EOF 1.

In step S1513, the host 1201 issues a write command (write (EOF 2)) to write an EOF 2.

In step S1514, the host 1201 issues a write tape mark command to write a TM.

In step S515, when the multi-file process is performed, control is returned to step S1506. When the process being performed is not the multi-file process (when the single file process is performed), control is passed to step S1516.

In step S1516, the host 1201 transmits to the host interface control unit 1311 a write tape mark command to write a TM and an unload command to perform an unloading process, thereby terminating the job.

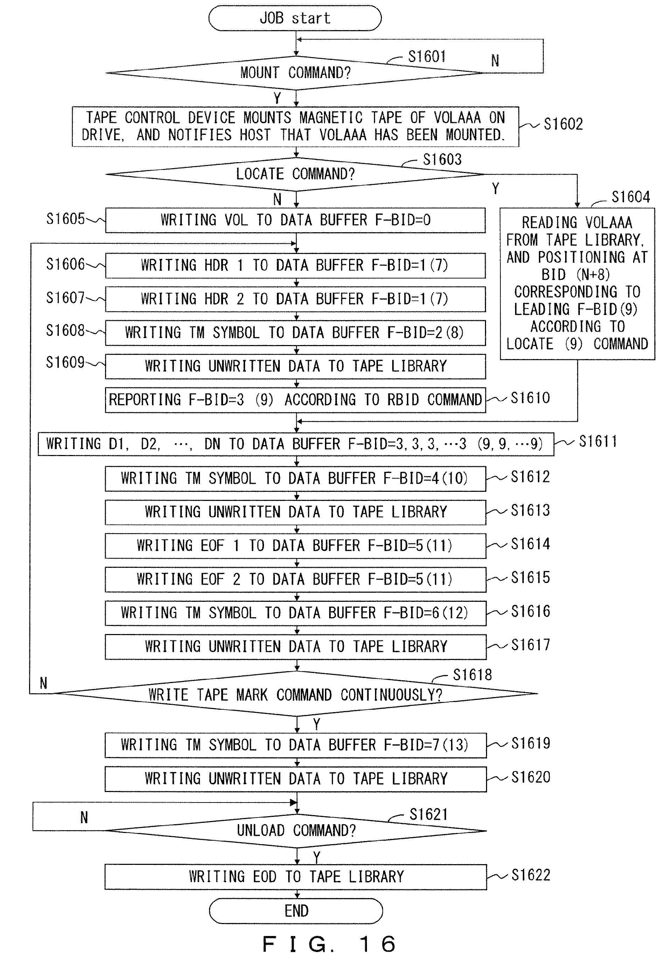

FIG. 16 is a flowchart of a writing process and an updating process of a tape control device according to the second embodiment.

The writing process and the updating process of the virtual tape device 301 when the host 201 performs the process described with reference to FIG. 15 are described with reference to FIG. 16.

In step S1601, when the mount command is received from the host 1201, control is passed to step S1602.

In this process, assume that the host interface control unit 1311 has received a mount command to mount a tape volume having the volume name of VOLAAA.

In step S1602, the drive IF control unit 1364 mount the magnetic tape 1412 having the volume name of VOLAAA on the drive 1413. The data buffer control unit 1324 notifies the host 1201 that the VOLAAA has been mounted.

In step S1603, when the locate command is received (when the host 1201 performs the file updating job), control is passed to step S1604. When a command other than the locate command is received (when the host 1201 performs the write job), control is passed to step S1605.

In step S1604, assume that the process in step S 1504 in FIG. 15 is performed in the host 1201.

In step S1604, the host IF control unit 1322 receives the locate (9) command. The drive IF control unit 1364 refers to the management table 1393, acquires BID=n+8 corresponding to the leading block in the block of F-BID=9, and positions the tape head of the drive 1413 at BID=n+8.

In the process step in and subsequent to step S1605, assume that the host 1201 has performed the processes in and after step S 1505 in FIG. 15.

In step S1605, the ID control unit 1325 receives a write command (write (VOL)) to write a VOL, and adds a BID and an F-BID to the VOL. The data buffer control unit 1324 writes the VOL to the data buffer 1391. As illustrated in FIGS. 3 and 4, BID=0 and F-BID=0 are added to the VOL.

In step S1606, the ID control unit 1325 receives a write command (write (HDR 1)) to write HDR 1, and adds the BID and the F-BID to the HDR 1. The data buffer control unit 1324 writes data to the data buffer 1391. As illustrated in FIGS. 3 and 4, when the HDR 1 is the HDR 1 of File-1, BID=1 and F-BID=1 are added. When the HDR 1 is the HDR 1 of File-2, BID=n+5 and F-BID=7 are added.

In step S1607, the ID control unit 1325 receives the write command (write (HDR 2)) to write HDR 2, and adds a BID and an F-BID to the HDR 2. The data buffer control unit 1324 writes the HDR 2 to the data buffer 1391. As illustrated in FIGS. 3 and 4, when the HDR 2 is the HDR 2 of File-1, BID=2 and F-BID=1 are added. When the HDR 2 is the HDR 2 of File-2, BID=n+6 and F-BID=7 are added.

In step S1608, the ID control unit 1325 receives a write tape mark command to write a TM, and adds the BID and the F-BID to the TM. The data buffer control unit 1324 writes the TM to the data buffer 1391. As illustrated in FIGS. 3 and 4, when the TM is the TM of File-1, BID=3 and F-BID=2 are added. When the TM is the Tm of File-2, BID=n+7 and F-BID=8 are added.

In step S1609, the drive IF control unit 1364 writes the data not written to the magnetic tape 1412 and the BID of the unwritten data to the magnetic tape 1412 of the tape library 1401. For example, when the File-1 of FIG. 3 or 4 is written, the VOL, the HDR 1, the HDR 2, and the TM, and the BIDs added to the blocks are written to the magnetic tape 1412. The BID to be written to the magnetic tape 1412 may be the BID stored in the data buffer 1391, or the ID control unit 1365 may add the BID to each block during the write to the tape library 1401. The drive IF control unit 1364 does not write an F-BID to the magnetic tape 1412.

In step S1610, the data buffer control unit 1324 receives an RBID command and transmits the BID information to the host. In this process, the F-BID is used as the BID information. The data buffer control unit 1324 transmits F-BID=3 during the write of File-1, and F-BID=9 during the write of File-2 as the BID information. The F-BID to be transmitted is an F-BID indicating the block written to the data buffer 1391, and corresponds to the above-mentioned channel BID.

In step S1611, the ID control unit 1325 receives a write command (write (D1), write (D2), -, write (DN)) to write the blocks from D1 through DN of data blocks, and adds a BID and an F-BID to each data block. The data buffer control unit 1324 writes the data blocks D1 through DN to the data buffer 1391. As illustrated in FIGS. 3 and 4, when the data block of File-1 is written, BID=4 through n and F-BID=3 are added. When the data block of File-2 illustrated in FIG. 4 is written, BID=n+8 through m and F-BID=9 are added.

In step S1612, the ID control unit 2325 receives a write tape mark command to write a TM, and adds a BID and an F-BID to the TM. The data buffer control unit 1324 writes the TM to the data buffer 1391. As illustrated in FIGS. 3 and 4, if the TM follows the data block of File-1, BID=n+1 and F-BID=4 are added. If the TM follows the data block of File-2, BID=m+1 and F-BID=10 are added.

In step S1613, the drive IF control unit 1364 writes to the magnetic tape 1412 of the tape library 1401 the data unwritten to the magnetic tape 1412 in the data of the data buffer 1391 and the BID of the unwritten data. In detail, the drive IF control unit 1364 writes D1 through DN of a data block and a TM, and the BIDs added to the blocks to the magnetic tape 1412. The BID to be added to the magnetic tape 1412 may be the BID stored in the 1319, or the ID control unit 1365 may add a BID to each block during the write to the tape library 1401. The drive IF control unit 1364 does not write an F-BID to the 1412.

In step S1614, the ID control unit 1325 receives a write command (write (EOF 1)) to write EOF 1, and adds a BID and an F-BID to the EOF 1. The data buffer control unit 1324 writes the EOF 1 to the data buffer 1391. As illustrated in FIGS. 3 and 4, when the EOF 1 is the EOF 1 of File-1, BID=n+2 and F-BID=5 are added. When the EOF 1 is the EOF 1 of File-2, BID=m+2 and F-BID=11 are added.

In step S1615, the ID control unit 1325 receives a write command (write (EOF 2)) to write EOF 2, and adds a BID and an F-BID are added to the EOF 2. The data buffer control unit 1324 writes the EOF 2 to the data buffer 1391. As illustrated in FIGS. 3 and 4, when the EOF 2 is the EOF 2 of File-2, BID=m+3 and F-BID=11 are added.

In step S616, the ID control unit 1325 receives a write tape mark command to write a TM, and adds a BID and an F-BID to the TM. The data buffer control unit 1324 writes the TM to the data buffer 1391. As illustrated in FIGS. 3 and 4, when the TM follows the EOF 2 of File-1, BID=n+4 and F-BID=6 are added. When the TM follows the EOF 2 of the File-2, BID=m+4 and F-BID=12 are added.

In step S1617, the drive IF control unit 1364 writes to the magnetic tape 1412 of the tape library 1401 the data unwritten to the magnetic tape 1412 in the data of the data buffer 1391 and the BID of the unwritten data. In detail, the drive IF control unit 1364 writes EOF 1, EOF 2, and a TM, and the BIDs added to the blocks to the magnetic tape 1412. The BID to be added to the magnetic tape 1412 may be the BID stored in the 1319, or the ID control unit 1365 may add a BID to each block during the write to the tape library 1401. The drive IF control unit 1364 does not write an F-BID to the 1412.

In step S1618, then a write tape mark command to write a TM is received, control is passed to step S1619, and when a command (write command) other than the write tape mark command is received, control is returned to step S1606.

In step S1619, the ID control unit 1325 receives a write tape mark command to write a TM, and adds the BID and the F-BID to the TM. The data buffer control unit 1324 writes the TM to the data buffer 1391. As illustrated in FIG. 3, when a single file tape format is applied, BID=n+5 and F-BID=7 are added. When a multi-file tape format is applied, BID=m+5 and F-BID=13 are added.

In step S1620, the drive IF control unit 1364 writes to the magnetic tape 1412 of the tape library 1401 the data unwritten to the magnetic tape 1412 in the data of the data buffer 1391 and the BID of the unwritten data. In detail, the drive IF control unit 1364 writes a TM and a BID added to the TM to the magnetic tape 1412. The BID to be written to the magnetic tape 1412 may be the BID stored in the 1319, or the ID control unit 1365 may add a BID to each block during the write to the tape library 1401. The drive IF control unit 1364 does not write an F-BID to the 1412.

In step S1621, when an unload command is received, control is passed to step S1622.

In step S1622, the ID control unit 1365 receives an unload command, and adds a BID and an F-BID to the EOD. The data buffer control unit 1324 writes the EOD to the data buffer 1391. As illustrated in FIG. 3, when a single file tape format is applied, BID=n+6 and F-BID=8 are added. When a multi-file tape format is applied as illustrated in FIG. 4, BID=m+6 and F-BID=14 are added. The drive IF control unit 1364 writes an EOD and a BID added to the EOD to the magnetic tape 1412. The BID to be written to the magnetic tape 1412 may be the BID stored in the 1319, or the ID control unit 1365 may add a BID to each block during the write to the tape library 1401. The drive IF control unit 1364 does not write an F-BID to the 1412. After writing the EOD to the magnetic tape 1412, the drive IF control unit 1364 unmounts a VOLAAA.

Described next is the error recovery process when a write error occurs according to the second embodiment.

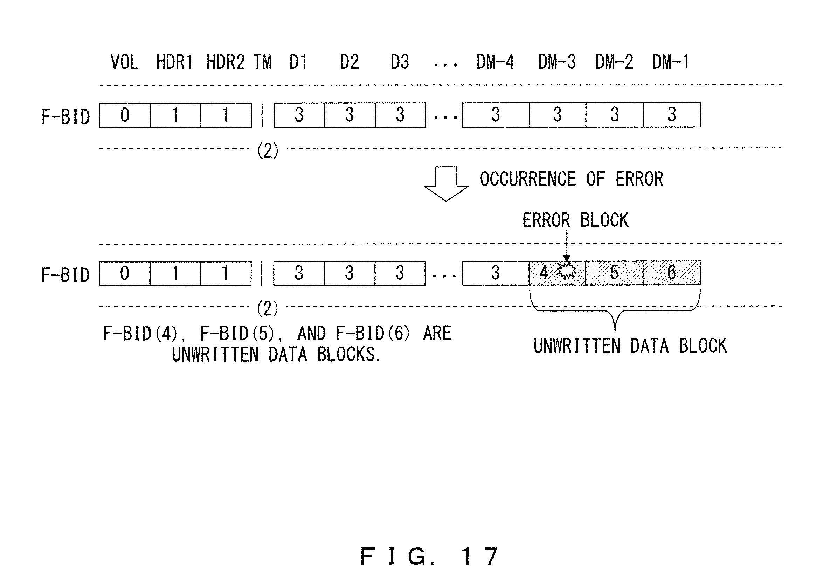

FIG. 17 illustrates an F-BID of a data buffer before detecting a write error and when detecting a write error.

The upper part of FIG. 17 illustrates the F-BID before detecting a write error, and the lower part of FIG. 17 illustrates the F-BID when detecting a write error.

The data buffer 1391 stores the blocks from VOL to DM-1, and it is assumed that the F-BID as illustrated at the upper part of FIG. 17 is added. As illustrated at the upper part of FIG. 17, F-BID=3 is added to the data blocks (D1 through DM-1).

The data buffer control unit 1324 writes the data to the data buffer 1391 in order from the head of the tape volume, and assume that a write error has occurred when writing the block DM-3 to the data buffer 1391.

The ID control unit 1325 updates the F-BID of the data buffer 1391 so that the F-BID is incremented by 1 for each block in order from the block in which an error has occurred.

Thus, as illustrated at the lower part of FIG. 17, the F-BID has been updated so that the F-BID is incremented by I for each block in order from the error block (DM-3). That is, F-BID=4, 5, and 6 are respectively added to the block DM-3, DM-2, and DM-1.

Since the blocks (DM-3 through DM-1) of F-BID=4 through 6 are not written to the disk array device 391, they are unwritten data (blocks)

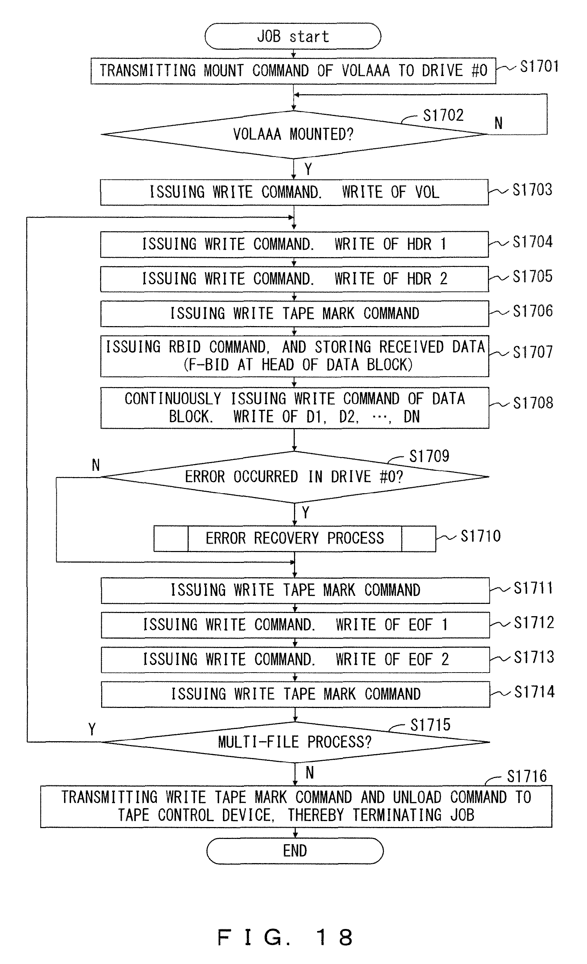

FIG. 18 illustrates the process of a host when a write error occurs according to the second embodiment.

In this process, there are a plurality of drives 1413 of the tape library 1401 (drive #0, drive #1), and the host 1201 writes the tape volume having the volume name of VOLAAA using the drive #0 in the plurality of drives 1413 as described below.

In step S1701, the host 1201 transmits the mount command of the VOLAAA to the drive #0 of the tape library 1401.

In step S1702, the host 1201 checks the notification from the tape control device 1301, and when a notification that the VOLAAA has been mounted on the drive #0 is received, control is passed to step S 1703.

In step S1703, the host 1201 starts a write job, and issues a write command (write (VOL)) to write a VOL.

In step S1704, the host 1201 issues a write command (write (HDR 1)) to write HDR 1.

In step S1705, the host 1201 issues a write command (write (HDR 2)) to write HDR 2.

In step S1706, the host 1201 issues a write tape mark command to write a TM.

In step S1707, the host 1201 issued an RBID command, and stores the F-BID received from the tape control device 1301. The received F-BID is the F-BID of the leading block of the data block. The F-BID to be stored is a channel BID in the channel BID and the device BID included in the BID information received from the tape control device 1301.

In step S1708, the host 1201 continuously issues write commands (write (D1), write (D2), -, write (DN)) to write the blocks from D1 through DN of the data block.

In step S1709, when an error occurs in the drive #0, control is passed to step S1710. When no error occurs, control is passed to step S1711. When an error occurs, the host 1201 suspends the issue of a write command.

In step S1710, the host 1201 performs an error recovery process. The error recovery process is described later in detail. Assume that the host 1201 has suspended issuing a write command to write a block in and after the DM of the data block.

In step S1711, the host 1201 issues a write tape mark command to write a TM.

In step S1712, the host 1201 issues a write command (write (EOF 1)) to write an EOF 1.

In step S1713, the host 1201 issues a write command (write (EOF 2)) to write an EOF 2.

In step S1714, the host 1201 issues a write tape mark command to write a TM.

In step S1715, when a multi-file process is performed, control is returned to step S1704, and when the multi-file process is not performed (a single file process is performed), control is passed to step S1716.

In step S1716, the host 1201 transmits to the tape control device 1301 a write tape mark command to write a TM and an unload command to perform unloading, thereby terminating the job.

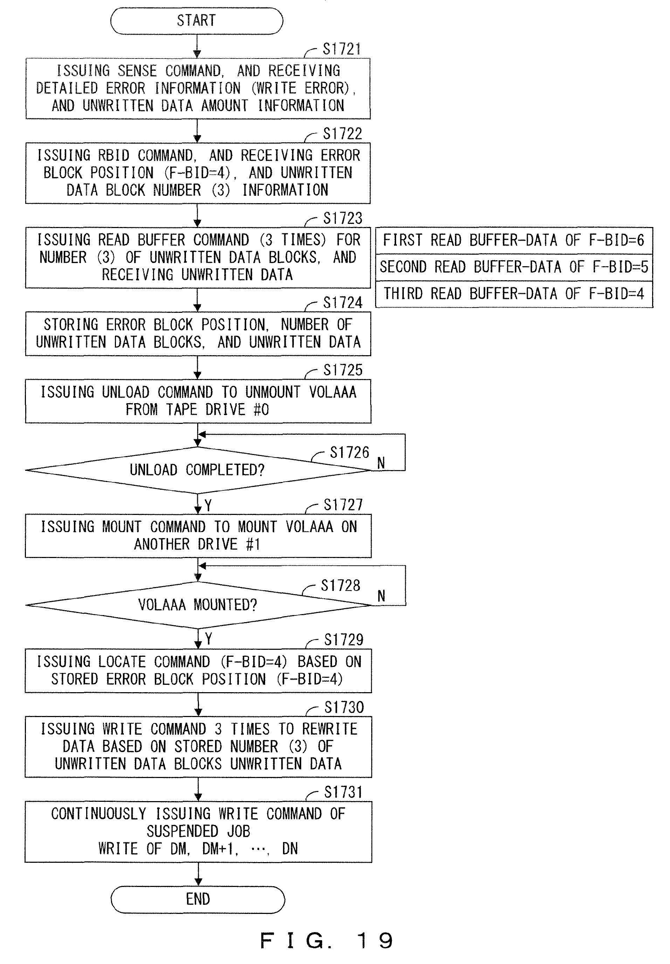

FIG. 19 is a detailed flowchart of the error recovery process according to the first embodiment.

FIG. 19 corresponds to step S1710 in FIG. 18.

With reference to FIG. 19, the case in which a write error has occurred, and an F-BID of the data buffer 1391 has been updated as illustrated in FIG. 17 is described. That is, the blocks of F-BID=4 through 6 is unwritten data not written to the tape library 1401.

In step S1721, the host 1201 issues a sense command, and receives from the tape control device 1301 detailed error information (write error) and the amount of data not yet written as sense information.

In step S1722, the host 1201 issues an RBID command, and receives the position of a block (error block) in which an error has occurred (that is, F-BID (=4) of an error block) and unwritten data block number information (=3). The F-BID of the error block is a device BID included in the BID information received from a host 1201.

In step S1723, the host 1201 issues a read buffer command for each of the unwritten data blocks (that is, issuing the read buffer command three times), and receives the unwritten data from the tape control device 1301.

Described below is a read buffer command.

Upon receipt of the read buffer command, the tape control device 1301 transmits to the host 1201 the data for one block in order from a larger F-BID of unwritten data (that is, the data unwritten in the tape library 1401) existing in the data buffer 1391 of the tape control device 1301.

The host 1201 receives the data of the block of F-BID=6 by the issue of the first read buffer command, the data of the block of F-BID=5 by the issue of the second read buffer command, and the data of the block of F-BID=4 by the third issue of the read buffer command.

In step S1724, the host 1201 stores in the host 1201 the error block position, the unwritten data block number information, and the unwritten data.

In step S1725, the host 1201 issues to the tape control device 1301 an unload command to unmount the VOLAAA from the drive #0.

In step S 1726, when the host 1201 receives a notification of the completion of an unmounting process from the tape control device 1301, control is passed to step S 1727.

In step S1727, the host 1201 transmits to the tape control device 1301 the mount command to mount the VOLAAA to another drive #1.

In step S1728, the host 1201 checks the notification from the tape control device 1301. When the host 201 receives a notification that the VOLAAA has been mounted to the drive #1, control is passed to step S1729.

In step S1729, the host 1201 issues a locate command (locate (4)) to position the tape head of the drive #1 at the error block position according to the stored error block position (F-BID=4).

In step S 1730, the host 1201 issues a write command to write unwritten data for unwritten data block number information (that is, three times) based on the stored unwritten data block number information and the unwritten data. In detail, the host 1201 issues the first write command to write unwritten data of F-BID=4, the second write command to write unwritten data of F-BID=5, and the third write command to write unwritten data of F-BID=6.

In step S1731, the host 1201 continuously issues the write command of suspended jobs, that is, the write command ((write (DM), write (DM+1), ∼, write (DN)) to write the DM through DN of the data block.

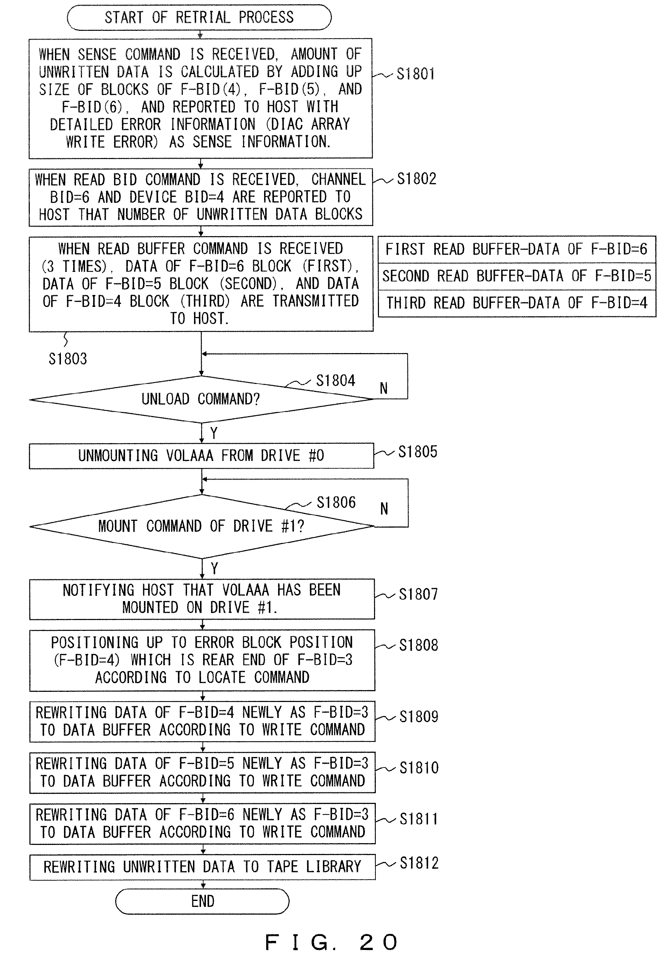

FIG. 20 is a flowchart of the error recovery process of the tape control device according to the second embodiment.

FIG. 20 illustrates the process of the tape control device 1301 when the host 1201 performs the error recovery process in FIG. 19.

First, the data buffer 1391 of the tape control device 1301 stores the data of the tape volume to which the F-BID as illustrated at the upper part of FIG. 17 is added.

As described above with reference to FIG. 17, when a write error occurs, the ID control unit 1325 updates the F-BID to increment the F-BID by 1 for each block in order from the block in which an error of a tape volume of the data buffer 1391 occurs.

Thus, the data of the tape volume to which the F-BID as illustrated at the lower part of FIG.17 is stored in the data buffer 1391.

As described above with reference to FIG. 17, assume that an error has occurred in the block of F-BID=4, and the blocks of F-BID=4 through 6 are unwritten to the magnetic tape 1412 of the tape library 1401.

In step S1801, the data buffer control unit 1324 receives a sense command, and calculates a total size (amount of unwritten data) of the unwritten data (that is, the blocks of F-BID=4 through 6) in the tape library 1401. The data buffer control unit 1324 notifies the host 1201 of the amount of unwritten data and the detailed error information (write error) as sense information.

In step S1802, the data buffer control unit 1324 receives an RBID command, notifies the host 1201 of the channel BID (=6) and the device BID (=4) as BID information, and notifies the host 1201 of the number of unwritten data blocks (=3). The channel BID and the device BID are represented by the number of an F-BID.

In step S1803, the data buffer control unit 1324 receives the read buffer command three times, transmits to the host 1201 the data of the block of F-BID=6 in response to the first read buffer command, transmits to the host 1201 the data of the block of F-BID=5 in response to the second read buffer command, and transmits to the host 1201 the data of the block of F-BID=4 in response to the third read buffer command.

In step S1804, when the tape control device 1301 receives an unload command for the VOLAAA of the drive #0, control is passed to step S1805.

In step S1805, the drive IF control unit 1364 unmounts the VOLAAA from the drive #0.

In step S1806, when the 1301 receives a mount command of the VOLAAA to the drive #1, control is passed to step S1807.

In step S1807, the drive IF control unit 1364 mounts the VOLAAA to the drive #1, and notifies the host 1201 that the VOLAAA has been mounted to the drive #1.

In step S1808, the drive IF control unit 1364 receives a locate command (locate (4)), and positions the tape head of the drive #1 between the block at the end of F-BID=3 and the error block (F-BID=4). That is, by positioning the tape head after the written block, that is, at the head of the error block, a write may be performed from the position of the error block. Since the tape library 1401 manages the position of a block using a BID, the drive IF control unit 1364 refers to the management table 1393, acquires the BID corresponding to the F-BID, and positions the tape head using the BID.

In step S1809, the ID control unit 1325 receives a write command to write unwritten data of F-BID=4, adds F-BID=3 to the unwritten data, and the data buffer control unit 1324 rewrites (overwrites) the unwritten data to the data buffer 1391. That is, the ID control unit 1325 adds the F-BID similar to the F-BID added when no error is detected during the error recovery process. In addition, the ID control unit 1325 adds a BID to the unwritten data.

In step S1810, the ID control unit 1325 receives a write command to write unwritten data of F-BID=5, adds F-BID=3 to the unwritten data, and the data buffer control unit 1324 rewrites (overwrites) the unwritten data to the data buffer 1391. That is, the ID control unit 1325 adds the F-BID similar to the F-BID added when no error is detected during the error recovery process. In addition, the ID control unit 1325 adds a BID to the unwritten data.

In step S1811, the ID control unit 1325 receives a write command to write unwritten data of F-BID=6, adds F-BID=3 to the unwritten data, and the data buffer control unit 1324 rewrites (overwrites) the unwritten data to the data buffer 1391. That is, the ID control unit 1325 adds the F-BID similar to the F-BID added when no error is detected during the error recovery process. In addition, the ID control unit 1325 adds a BID to the unwritten data.

In steps S1809 through S1811, the ID control unit 1325 adds F-BID according to the update rule of the F-BID described above with reference to FIGS. 3 and 4. Thus, the ID control unit 1325 adds to unwritten data the same F-BID as the F-BID (=3) added to the unwritten data before an error occurs.

In step S1812, the drive IF control unit 1364 writes unwritten data and a BID to the tape library 1401. In detail, the drive IF control unit 1364 writes the unwritten data stored in the data buffer 1391 in steps S1809 through S1811 and the BID of the unwritten data to the tape library 1401. The BID may be the BID stored in the data buffer 1391, or the ID control unit 1365 may add the BID.

According to the system of the first embodiment, since an F-BID is used in the control of the data buffer between the tape control device and the host, the host may manage a tape volume of 137 GB or more.

According to the system of the second embodiment, when a write error at the position (area over 137 GB) over the capacity which may be managed by the OS using the 22-bit BID when the OS (F-BID 22 bit control) for control of a 36 track tape format is used, the error block position and the subsequent unwritten block position may be specified, thereby recovering the error.

## Claims

1. A virtual tape device (301) which is connected to an upper device (201) and a tape library device (401) including a magnetic tape, and stores a tape volume of a virtual tape drive, the virtual tape device comprising:
a storage unit (391) to store the tape volume including a plurality of blocks;
an identifier control unit (325) to add to each block of the tape volume a first identification number which is incremented for each block of the tape volume, and a second identification number which is incremented only in a block subsequent to a leading block of the tape volume, a tape mark indicating a delimiter of a file, and a block subsequent to the tape mark;
a first control unit (324) to control a read and a write of the tape volume stored in the storage unit using the second identification number between the virtual tape device and the upper device; and
a second control unit (364) to write the tape volume and the first identification number to the tape library device, and to control the tape library device using the first identification number.

2. The virtual tape device (301) according to claim 1, further comprising a buffer (333) to store the tape volume, wherein
the first control unit (324) stores the tape volume in the buffer before storing the tape volume in the storage unit;
the identifier control unit (325) adds a first identifier and a second identifier to each block of the tape volume of the buffer, and when an error occurs during the first control unit writes the tape volume to the storage unit (391), the identifier control unit (325) performs update so that a second identifier of a block in which the error has occurred in the buffer and a block subsequent to the block in which the error has occurred is incremented for each block.

3. The virtual tape device (301) according to claim 2, wherein
the first control unit (324)
transmits to the upper device the block in which the error has occurred in the buffer and the block subsequent to the block in which the error has occurred
receives from the upper device the block in which the error has occurred and the block subsequent to the block in which the error has occurred
stores in the buffer the received block in which the error has occurred and block subsequent to the block in which the error has occurred, and
the identifier control unit (325) adds to the block in which the error has occurred and the block subsequent to the block in which the error has occurred the second identifier having a same number as the second identifier added before the error occurs to the block in which the error has occurred and the block subsequent to the block in which the error has occurred.

4. A tape control method used by a virtual tape device (301) which is connected to an upper device (201) and a tape library device (401) including a magnetic tape, and stores a tape volume of a virtual tape drive, the method comprising:
storing the tape volume including a plurality of blocks;
adding to each block of the tape volume a first identification number which is incremented for each block of the tape volume, and a second identification number which is incremented only in a block subsequent to a leading block of the tape volume, a tape mark indicating a delimiter of a file, and a block subsequent to the tape mark;
controlling a read and a write of the tape volume using the second identification number between the virtual tape device and the upper device; and
writing the tape volume and the first identification number to the tape library device.

5. A tape control device (1301) which is connected to an upper device (1201) and a tape library device (1401) including a magnetic tape, and stores a tape volume, the tape control device comprising:
a buffer (1391) to store the tape volume including a plurality of blocks;
an identifier control unit (1325) to add to each block of the tape volume a first identification number which is incremented for each block of the tape volume, and a second identification number which is incremented only in a block subsequent to a leading block of the tape volume, a tape mark indicating a delimiter of a file, and a block subsequent to the tape mark;
a first control unit (1324) to control a read and a write of the tape volume stored in the buffer using the second identification number between the virtual tape device and the upper device; and
a second control unit (1364) to write the tape volume and the first identification number to the tape library device (1401), and to control the tape library device (1401) using the first identification number.

6. The tape control device (1301) according to claim 5, wherein
when an error occurs during the second control unit (1364) writes the tape volume to the tape library device (1401), the identifier control unit (1325) performs update so that a second identifier of a block in which the error has occurred and a block subsequent to the block in which the error has occurred is incremented for each block.

7. The tape control device (1301) according to claim 6, wherein
the first control unit (1324)
transmits to the upper device the block in which the error has occurred in the buffer and the block subsequent to the block in which the error has occurred
receives from the upper device the block in which the error has occurred and the block subsequent to the block in which the error has occurred
stores in the buffer the received block in which the error has occurred and block subsequent to the block in which the error has occurred, and
the identifier control unit (1325) adds to the block in which the error has occurred and the block subsequent to the block in which the error has occurred the second identifier having a same number as the second identifier added before the error occurs to the block in which the error has occurred and the block subsequent to the block in which the error has occurred.

8. A tape control method used by a tape control device (1301) which is connected to an upper device (1201) and a tape library device (1401) including a magnetic tape, and stores a tape volume, the method comprising:
storing the tape volume including a plurality of blocks;
adding to each block of the tape volume a first identification number which is incremented for each block of the tape volume, and a second identification number which is incremented only in a block subsequent to a leading block of the tape volume, a tape mark indicating a delimiter of a file, and a block subsequent to the tape mark;
controlling a read and a write of the tape volume using the second identification number between the tape control device and the upper device; and
writing the tape volume and the first identification number to the tape library device.
